# FASCICULE DE BREVET EUROPEEN

(11) **EP 4 304 351 B1**
(45) Date de publication et mention de la délivrance du brevet: **22.10.2025**
(21) Numéro de dépôt: 22707453.1
(22) Date de dépôt: 23.02.2022
(51) Int. Cl.: A01M 7/00, A01C 23/04

(54) **SYSTEME DE PULVERISATION POUR ENGIN AGRICOLE COMPRENANT UNE PREMIERE ET UNE DEUXIEME CUVES PRINCIPALES**
SPRÜHSYSTEM FÜR EINE LANDWIRTSCHAFTLICHE MASCHINE MIT EINEM ERSTEN UND EINEM ZWEITEN HAUPTTANK
SPRAYING SYSTEM FOR AN AGRICULTURAL MACHINE COMPRISING A FIRST AND A SECOND MAIN TANK

(30) Priorité: 12.03.2021 FR 2102445
(43) Date de publication de la demande: 17.01.2024
(73) Titulaire: Exel Industries, 51200 Epernay (FR)
(72) Inventeur: PITAUD, Sylvain, 75009 PARIS (FR); CHARCOSSET, Philippe, 75009 PARIS (FR)
(74) Mandataire: Bandpay & Greuter
(86) Numéro de dépôt international: PCT/EP2022/054569
(87) Numéro de publication internationale: WO 2022/189151

(56) Documents cités:
- EP-A1- 1 378 293
- EP-A1- 1 985 178
- US-A- 4 697 739

## Description

### Domaine technique

L'invention concerne un système de pulvérisation pour engin agricole, un sous-système de pulvérisation pour un tel système de pulvérisation, ainsi qu'un engin agricole comprenant un tel système de pulvérisation.

### ÉTAT DE LA TECHNIQUE ANTÉRIEURE

Il existe de manière connue des systèmes de pulvérisation pour engin agricole comprenant une rampe de pulvérisation et un circuit de liquide comprenant lui-même deux cuves principales remplies de liquide de traitement et des buses de pulvérisation montées sur la rampe de pulvérisation et alimentées en liquide de traitement pour le pulvériser sur des végétaux à traiter d'un champ. Ces deux cuves principales sont en outre reliées l'une à l'autre par des lignes de transfert permettant d'assurer le transfert de liquide de traitement de l'une à l'autre des deux cuves principales, dans les deux sens.

De tels systèmes de pulvérisation ont toutefois connus peu d'évolutions et/ou peu d'améliorations depuis le début de leur mise en œuvre.

Il existe donc un besoin de faire évoluer et/ou d'améliorer de tels systèmes de pulvérisation.

On connaît le document EP 1985178 B1 qui décrit un système de pulvérisation à deux cuves, avec un système de pompage qui est activé ou désactivé pour transférer un liquide de traitement d'une cuve à l'autre. Le système décrit dans EP 1985178 B1 est toutefois limité car il ne permet pas une gestion précise et en continue du débit de liquide entre les deux cuves.

### Exposé de l'invention

A cet effet, la présente invention a pour objet un système de pulvérisation pour engin agricole, comprenant un circuit de liquide comprenant lui-même :
- une première cuve principale destinée à contenir un liquide de traitement,
- une deuxième cuve principale destinée à contenir un liquide de traitement,
- une première ligne de transfert reliant la première cuve principale et la deuxième cuve principale l'une à l'autre et comprenant un premier dispositif à effet Venturi conçu pour aspirer du liquide de traitement de l'une des première et deuxième cuves principales et pour refouler ledit liquide de traitement vers l'autre des première et deuxièmes cuves principales au moyen d'un premier injecteur,
- un premier ensemble de pompage comprenant une première pompe comprenant elle-même une entrée et une sortie, la première pompe étant conçue pour aspirer du liquide par l'entrée et pour refouler le liquide aspiré par la sortie,
- au moins une première ligne de refoulement reliée, en amont, à la sortie de la première pompe, l'une des premières lignes de refoulement, dite première ligne d'injection, reliant la sortie de la première pompe au premier injecteur du premier dispositif à effet Venturi,
- des premiers moyens de réduction de débit de liquide de traitement circulant dans la première ligne de transfert.

Selon un mode de réalisation, les premiers moyens de réduction de débit de liquide de traitement circulant dans la première ligne de transfert comprennent une deuxième vanne à débit réglable positionnée dans la première ligne de transfert.

Selon un mode de réalisation alternatif, une première ligne de dérivation relie la première ligne d'injection à la première cuve principale et comprenant une première vanne de dérivation conçue pour ouvrir et pour fermer la première ligne de dérivation, de sorte à dévier une partie du liquide circulant dans la première ligne d'injection et réduire une vitesse de transfert de liquide de traitement entre les première et deuxième cuves principales le long de la première ligne de transfert, lorsque la première ligne de dérivation est ouverte et que la première pompe refoule du liquide vers la première ligne d'injection.

Selon des variantes de réalisation qui peuvent être prises ensemble ou séparément :
- le circuit de liquide comprend une deuxième ligne de transfert reliant la première cuve principale et la deuxième cuve principale l'une à l'autre et comprenant un deuxième dispositif à effet Venturi conçu pour aspirer du liquide de traitement de l'autre des première et deuxième cuves principales et pour refouler ledit liquide de traitement vers l'une des première et deuxième cuves principales au moyen d'un deuxième injecteur ;
- l'une des premières lignes de refoulement, dite deuxième ligne d'injection, relie la sortie de la première pompe au deuxième injecteur du deuxième dispositif à effet Venturi ;

Le circuit de liquide comprend des deuxièmes moyens de réduction de débit de liquide de traitement circulant dans la deuxième ligne de transfert.

Ces deuxièmes moyens de réduction de débit peuvent être une troisième vanne à débit réglable positionnée dans la deuxième ligne de transfert.

Selon un mode de réalisation alternatif, le circuit de liquide comprend une deuxième ligne de dérivation reliant la deuxième ligne d'injection à la première cuve principale et comprenant une deuxième vanne de dérivation conçue pour ouvrir et pour fermer la deuxième ligne de dérivation, de sorte à dévier une partie du liquide circulant dans la deuxième ligne d'injection et réduire une vitesse de transfert de liquide de traitement entre les première et deuxième cuves principales le long de la deuxième ligne de transfert, lorsque la deuxième ligne de dérivation est ouverte et que la première pompe refoule du liquide vers la deuxième ligne d'injection ;
- le système de pulvérisation comprend au moins une première ligne d'aspiration reliée, en aval, à l'entrée de la première pompe, la ou l'une des premières lignes d'aspiration, dite première ligne d'aspiration de cuve principale, reliant la première cuve principale à l'entrée de la première pompe ;
- le premier ensemble de pompage est conçu pour, dans une première configuration, mettre en communication la première ligne d'aspiration de cuve principale avec chacune des première et deuxième lignes d'injection, de manière à obtenir une boucle de circulation continue de liquide de traitement entre les première et deuxième cuves principales ;
- le système de pulvérisation comprend en outre une unité de commande ;
- la première cuve principale comprend un premier détecteur de niveau conçu pour détecter un niveau de liquide dans la première cuve principale ;
- la deuxième cuve principale comprend un deuxième détecteur de niveau conçu pour détecter un niveau de liquide dans la deuxième cuve principale ;
- l'unité de commande est conçue pour, lorsque le premier dispositif à effet Venturi aspire et refoule du liquide de traitement de l'une des première et deuxième cuves principales vers l'autre des première et deuxième cuves principales :
   * commander la première vanne de dérivation d'ouvrir la première ligne de dérivation, lorsqu'un écart entre le niveau de liquide détecté par le premier détecteur de niveau et le niveau de liquide détecté par le deuxième détecteur de niveau est supérieur ou égal à un écart seuil prédéterminé et que le niveau de liquide détecté le plus bas est celui du premier ou du deuxième détecteur de niveau de l'une des première et deuxième cuves principales,
   * commander la première vanne de dérivation de fermer la première ligne de dérivation, lorsque l'écart entre le niveau de liquide détecté par le premier détecteur de niveau et le niveau de liquide détecté par le deuxième détecteur de niveau est inférieur à l'écart seuil.
- l'unité de commande est conçue pour, lorsque le deuxième dispositif à effet Venturi aspire et refoule du liquide de traitement de l'autre des première et deuxième cuves principales vers l'une des première et deuxième cuves principales :
   * commander la deuxième vanne de dérivation d'ouvrir la deuxième ligne de dérivation, lorsque l'écart entre le niveau de liquide détecté par le premier détecteur de niveau et le niveau de liquide détecté par le deuxième détecteur de niveau est supérieur ou égal à l'écart seuil et que le niveau de liquide détecté le plus bas est celui du premier ou du deuxième détecteur de niveau de l'autre des première et deuxième cuves principales,
   * commander la deuxième vanne de dérivation de fermer la deuxième ligne de dérivation, lorsque l'écart entre le niveau de liquide détecté par le premier détecteur de niveau et le niveau de liquide détecté par le deuxième détecteur de niveau est inférieur à l'écart seuil ;
- l'unité de commande est conçue pour commander la première vanne de dérivation et/ ou la deuxième vanne de dérivation de s'ouvrir et de se fermer entre une position d'ouverture maximale et une position fermée, en fonction d'un écart entre le niveau de liquide détecté par le premier détecteur de niveau et le niveau de liquide détecté par le deuxième détecteur de niveau et du plus bas ou du plus haut des niveaux de liquide détectés par les premier et deuxième détecteurs de niveau, lorsque le premier dispositif à effet Venturi aspire et refoule du liquide de traitement de l'une des première et deuxième cuves principales vers l'autre des première et deuxième cuves principales et/ ou que le deuxième dispositif à effet Venturi aspire et refoule du liquide de traitement de l'autre des première et deuxième cuves principales vers l'une des première et deuxième cuves principales ;
- le système de pulvérisation s'étend suivant une direction longitudinale orientée d'arrière en avant dans un sens d'avancement dudit système de pulvérisation ;
- la première cuve principale est agencée à l'avant du système de pulvérisation, tandis que la deuxième cuve principale est agencée à l'arrière du système de pulvérisation ;
- la première cuve principale, le premier ensemble de pompage, la ou les premières lignes de refoulement, la première ligne de dérivation et/ou la deuxième ligne de dérivation forment un premier sous-système de pulvérisation ;
- la deuxième cuve principale forme un deuxième sous-système de pulvérisation ;
- la première ligne de transfert est formée d'au moins deux premiers tronçons de transfert conçus pour se connecter et se déconnecter entre eux de manière réversible, l'un des premiers tronçons de transfert faisant partie du premier sous-système de pulvérisation et comprenant le premier dispositif à effet Venturi, l'autre ou un autre des premiers tronçons de transfert faisant partie du deuxième sous-système de pulvérisation ;
- la deuxième ligne de transfert est formée d'au moins deux deuxièmes tronçons de transfert conçus pour se connecter et se déconnecter entre eux de manière réversible, l'un des deuxièmes tronçons de transfert faisant partie du premier sous-système de pulvérisation et comprenant le deuxième dispositif à effet Venturi, l'autre ou un autre des deuxièmes tronçons de transfert faisant partie du deuxième sous-système de pulvérisation.

L'invention concerne aussi un sous-système de pulvérisation pour système de pulvérisation tel que précédemment décrit, ledit sous-système de pulvérisation formant le premier sous-système de pulvérisation, le premier tronçon de transfert du premier sous-système de pulvérisation étant apte à se connecter de manière réversible au premier tronçon de transfert du deuxième sous-système de pulvérisation et/ou le deuxième tronçon de transfert du premier sous-système de pulvérisation étant apte à se connecter de manière réversible au deuxième tronçon de transfert du deuxième sous-système de pulvérisation.

L'invention concerne encore un engin agricole comprenant un système de pulvérisation tel que précédemment décrit.

### Brève description des dessins

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
[Fig.1] est une vue schématique d'un système de pulvérisation pour engin agricole selon un mode de réalisation de l'invention ;
[Fig.2] est une vue schématique d'un système de pulvérisation pour engin agricole selon un autre mode de réalisation de l'invention ;
[Fig.3] est une vue schématique d'un système de pulvérisation pour engin agricole selon un autre mode de réalisation de l'invention ;
[Fig.4] est une vue schématique d'un système de pulvérisation pour engin agricole selon un autre mode de réalisation de l'invention ;
[Fig.5] est une vue schématique d'un système de pulvérisation pour engin agricole selon un autre mode de réalisation de l'invention ;
[Fig.6] est une vue schématique d'un système de pulvérisation pour engin agricole selon un autre mode de réalisation de l'invention ;
[Fig.7] est une vue schématique d'un système de pulvérisation pour engin agricole selon un autre mode de réalisation de l'invention ;
[Fig.8] montre une vue schématique d'un système de pulvérisation pour engin agricole selon un autre mode de réalisation de l'invention.

### DESCRIPTION DETAILLEE

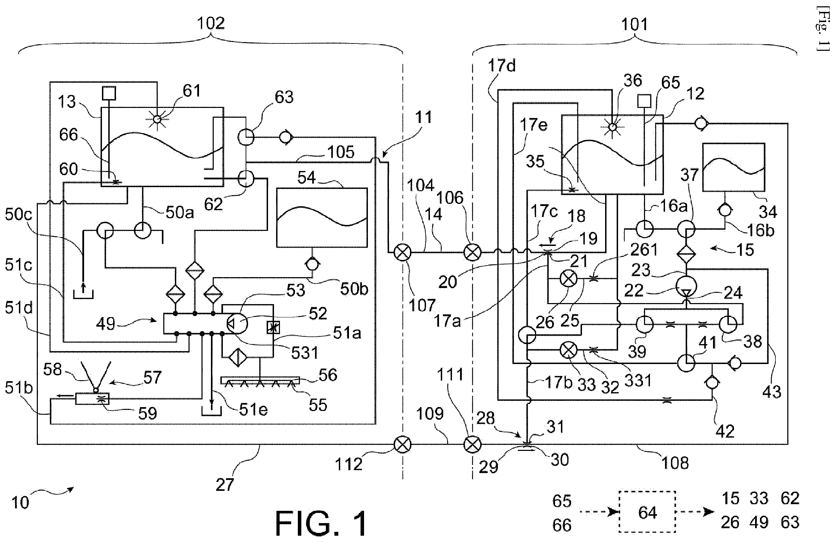

Les figures 1 à 8 montrent un système de pulvérisation 10 pour engin agricole, notamment destiné à pulvériser un liquide de traitement dans un champ de végétaux à traiter, par exemple de grandes cultures, telles que la culture de céréales, selon différents modes de réalisation de l'invention.

Le système de pulvérisation 10 est en contact avec un sol, notamment du champ de végétaux à traiter, par exemple par l'intermédiaire de roues (non représentées) permettant son déplacement.

Le système de pulvérisation 10 est par exemple destiné à être porté par l'engin agricole, tel qu'un tracteur.

Il est adopté à titre non limitatif un repère orthogonal comprenant une direction longitudinale vers l'avant dans le sens d'avancement de l'engin agricole, une direction transversale vers la gauche et une direction verticale vers le haut. Les directions longitudinale et transversale sont horizontales, globalement parallèles au sol.

Le système de pulvérisation 10 comprend un circuit de liquide 11 comprenant lui-même une première cuve principale 12 destinée à contenir un liquide de traitement, une deuxième cuve principale 13 destinée à contenir un liquide de traitement, une première ligne de transfert 14, un premier ensemble de pompage 15, le cas échéant au moins une première ligne d'aspiration 16a, 16b, et au moins une première ligne de refoulement 17a-17f ([Fig.1]).

La première cuve principale 12 est par exemple agencée à l'avant du système de pulvérisation 10, tandis que la deuxième cuve principale 13 est agencée à l'arrière du système de pulvérisation 10.

La première ligne de transfert 14 relie la première cuve principale 12 et la deuxième cuve principale 13 l'une à l'autre.

La première ligne de transfert 14 comprend un premier dispositif à effet Venturi 18 conçu pour aspirer du liquide de traitement de l'une des première et deuxième cuves principales 12, 13 et pour refouler le liquide de traitement aspiré vers l'autre des première et deuxième cuves principales 12, 13 au moyen d'un premier injecteur 21. La première ligne de transfert 14 permet ainsi d'assurer un transfert de liquide de traitement de l'une des première et deuxième cuves principales 12, 13 à l'autre des première et deuxième cuves principales 12, 13. Par exemple, le premier dispositif à effet Venturi 18 est conçu pour aspirer du liquide de traitement de la première cuve principale 12 et le refouler vers la deuxième cuve principale 13.

Le premier dispositif à effet Venturi 18 comprend une première entrée 19, une première sortie 20 et le premier injecteur 21 conçu pour injecter du liquide à travers le premier dispositif à effet Venturi 18 vers la première sortie 20. La première entrée 19 est reliée à l'une des première et deuxième cuves principales 12, 13. La première sortie 20 est reliée à l'autre des première et deuxième cuves principales 12, 13. Par exemple, la première entrée 19 est reliée à la première cuve principale 12, tandis que la première sortie 20 est reliée à la deuxième cuve principale 13.

Le premier dispositif à effet Venturi 18 est conçu pour créer une dépression aspirant le liquide de traitement de l'une des première et deuxième cuves principales 12, 13 par la première entrée 19 et le refoulant par la première sortie 20, lorsque le premier injecteur 21 injecte du liquide à travers le premier dispositif à effet Venturi 18 en direction de la première sortie 20. Pour cela, le premier dispositif à effet Venturi 18 présente notamment une portion de tube convergente depuis la première entrée 19 vers une portion rétrécie et une portion divergente depuis la portion rétrécie vers la première sortie 20, le premier injecteur 21 étant agencé entre la première entrée 19 et la portion rétrécie.

Dans la suite de la description, les termes « amont » et « aval » tiennent compte du sens de circulation du liquide dans le circuit de liquide 11, qui est imposé le premier dispositif à effet Venturi 18.

Le premier ensemble de pompage 15 comprend une première pompe 22 comprenant elle-même une entrée 23 par laquelle la première pompe 22 aspire un liquide et une sortie 24 par laquelle la première pompe 22 refoule le liquide aspiré par l'entrée 23.

Dans la suite de la description, les termes « amont » et « aval » tiennent aussi compte du sens de circulation du liquide dans le circuit de liquide 11, qui est imposé par la première pompe 22.

La ou les premières lignes d'aspiration 16a, 16b sont chacune reliées, en aval, à l'entrée 23 de la première pompe 22. La ou les premières lignes d'aspiration 16a, 16b sont ainsi agencées en amont de la première pompe 22. La première pompe 22 peut ainsi aspirer du liquide dans la ou chacune des premières lignes d'aspiration 16a, 16b pour le refouler. Les premières lignes d'aspiration 16a, 16b sont parallèles entre elles.

La ou l'une 16a des premières lignes d'aspiration 16a, 16b, dite première ligne d'aspiration de cuve principale, relie la première cuve principale 12 à l'entrée 23 de la première pompe 22. La première pompe 22 peut ainsi aspirer du liquide de traitement provenant de la première cuve principale 12 pour le refouler.

La ou les premières lignes de refoulement 17a-17f sont chacune reliées, en amont, à la sortie 24 de la première pompe 22. La ou les premières lignes de refoulement 17a-17f sont ainsi agencées en aval de la première pompe 22. La première pompe 22 peut ainsi refouler du liquide dans la ou chacune des premières lignes de refoulement 17a-17f.

La ou l'une 17a des premières lignes de refoulement 17a-17f, dite première ligne d'injection, relie la sortie 24 de la première pompe 22 au premier injecteur 21 du premier dispositif à effet Venturi 18. La première pompe 22 peut ainsi aspirer du liquide de traitement provenant de la première cuve principale 12 pour le refouler vers le premier injecteur 21 du premier dispositif à effet Venturi 18, qui injecte alors le liquide de traitement refoulé par la première pompe 22 dans le premier dispositif à effet Venturi 18. Cette injection provoque, le long de la première ligne de transfert 14, une aspiration de liquide de traitement provenant de l'une des première et deuxième cuves principales 12, 13 pour le refouler vers l'autre des première et deuxième cuves principales 12, 13.

Le circuit de liquide 11 comprend par ailleurs des premiers moyens de réduction de débit de liquide de traitement circulant dans la première ligne de transfert 14.

Selon un mode de réalisation, le circuit de liquide 11 comprend ainsi une première ligne de dérivation 25 reliant la première ligne d'injection 17a à la première cuve principale 12 et comprenant une première vanne de dérivation 26 conçue pour ouvrir et pour fermer la première ligne de dérivation 25.

De cette manière, lorsque la première ligne de dérivation 25 est fermée, tout le liquide refoulé par la première pompe 22 et circulant dans la première ligne d'injection 17a est conduit au premier injecteur 21 du premier dispositif à effet Venturi 18 où il est injecté dans le premier dispositif à effet Venturi 18 et provoque une aspiration et un refoulement du liquide de traitement de l'une des première et deuxième cuves principales 12, 13 vers l'autre des première et deuxième cuves principales 12, 13. Tout le liquide refoulé par la première pompe 22 et circulant dans la première ligne d'injection 17a étant conduit au premier injecteur 21 et injecté dans le premier dispositif à effet Venturi 18, la quantité de liquide de traitement aspiré et refoulé par le premier dispositif à effet Venturi 18 est maximale.

Au contraire, lorsque la première ligne de dérivation 25 est ouverte, une partie du liquide refoulé par la première pompe 22 et circulant dans la première ligne d'injection 17a est déviée vers la première cuve principale 12, de sorte que seule une partie du liquide refoulé par la première pompe 22 est conduite au premier injecteur 21 et injecté dans le premier dispositif à effet Venturi 18. La quantité de liquide de traitement aspiré et refoulé par le premier dispositif à effet Venturi 18 est donc moindre.

La première ligne de dérivation 25 et la première vanne de dérivation 26 permettent ainsi d'obtenir un transfert de liquide de traitement de l'une des première et deuxième cuves principales 12, 13 à l'autre des première et deuxième cuves principales 12, 13 à au moins deux vitesses : un transfert plus rapide lorsque la première ligne de dérivation 25 est fermée et un transfert plus lent lorsque la première ligne de dérivation 25 est ouverte.

La première vanne de dérivation 26 est par exemple conçue pour occuper une position ouverte dans laquelle la première vanne de dérivation 26 autorise du liquide à circuler vers la première ligne de dérivation 25, et une position fermée dans laquelle la première vanne de dérivation 26 empêche du liquide de circuler vers la première ligne de dérivation 25 (figures 1 à 4). Lorsque la première vanne dérivation 26 occupe sa position ouverte, la première ligne de dérivation 25 est ouverte. Lorsque la première vanne dérivation 26 occupe sa position fermée, la première ligne de dérivation 25 est fermée. Le transfert de l'une des première et deuxième cuves principales 12, 13 à l'autre des première et deuxième cuves principales 12, 13 est alors à deux vitesses : un transfert plus rapide lorsque la première vanne de dérivation 26 occupe sa position fermée et un transfert plus lent lorsque la première vanne de dérivation 26 occupe sa position ouverte.

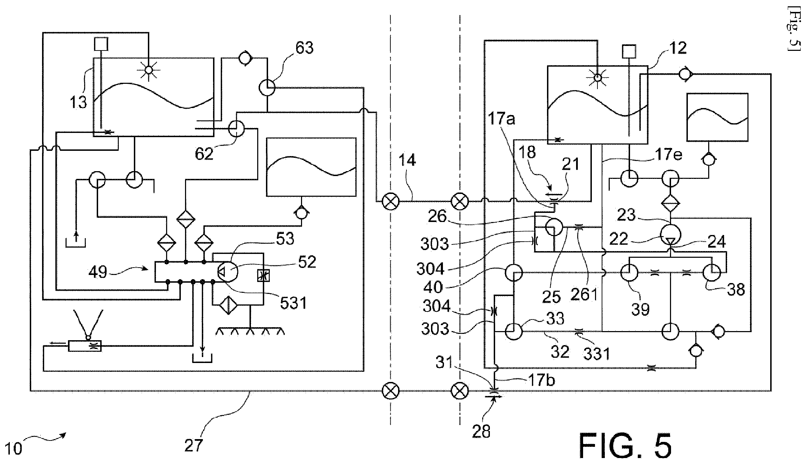

En variante ([Fig.5] à 7), la première vanne de dérivation 26 est conçue pour occuper une première position dans laquelle la première vanne de dérivation 26 met en communication la sortie 24 de la première pompe 22 avec la première ligne de dérivation 25, et une deuxième position dans laquelle la première vanne de dérivation 26 met en communication la sortie 24 de la première pompe 22 avec le premier injecteur 21. La première vanne de dérivation 26 est par exemple une vanne à trois voies. Lorsque la première vanne dérivation 26 occupe sa première position, la première ligne de dérivation 25 est ouverte et le transfert de l'une des première et deuxième cuves principales 12, 13 à l'autre des première et deuxième cuves principales 12, 13 est plus lent. Lorsque la première vanne dérivation 26 occupe sa deuxième position, la première ligne de dérivation 25 est fermée et le transfert de l'une des première et deuxième cuves principales 12, 13 à l'autre des première et deuxième cuves principales 12, 13 est plus rapide.

La première ligne de dérivation 25 peut en outre comprendre une première restriction 261 agencée en aval de la première vanne de dérivation 26. La première restriction 261 crée une perte de charge en aval de la première vanne de dérivation 26, de manière à éviter que la première ligne de dérivation 25 prélève tout ou en grande partie le liquide de traitement provenant de la première pompe 22, lorsque la première vanne de dérivation 26 occupe sa position ouverte ou sa première position. La première restriction 161 permet ainsi de s'assurer que suffisamment de liquide de traitement parvient au premier injecteur 21 pour être injecté dans le premier dispositif à effet Venturi 18, lorsque la première vanne de dérivation 26 occupe sa position ouverte ou sa première position, et donc que le transfert de l'une des première et deuxième cuves principales 12, 13 à l'autre des première et deuxième cuves principales 12, 13 ne s'arrête pas. Le dimensionnement de la première restriction 261 est par exemple déterminé de manière expérimentale.

La première ligne de dérivation, avec la première vanne de dérivation et la première restriction forment ensemble un exemple de premiers moyens de réduction de débit de liquide de traitement circulant dans la ligne de transfert 14 entre la première cuve principale 12 et la deuxième cuve principale 13.

En variante (non illustrée), la première vanne de dérivation 26 est conçue pour s'ouvrir et se fermer entre une position d'ouverture maximale et une position fermée. Lorsque la première vanne dérivation 26 occupe sa position d'ouverture maximale et toute position entre la position d'ouverture maximale et la position fermée, la première ligne de dérivation 25 est ouverte. Lorsque la première vanne dérivation 26 occupe sa position fermée, la première ligne de dérivation 25 est fermée. Le transfert de l'une des première et deuxième cuves principales 12, 13 à l'autre des première et deuxième cuves principales 12, 13 est alors à plus de deux vitesses : un transfert plus rapide lorsque la première vanne de dérivation 26 occupe sa position fermée et un transfert de plus en plus lent à mesure que la première vanne de dérivation 26 s'ouvre jusqu'à atteindre la position d'ouverture maximale.

Le circuit de liquide 11 comprend par exemple aussi une deuxième ligne de transfert 27 reliant la première cuve principale 12 et la deuxième cuve principale 13 l'une à l'autre (figures 1 à 6).

La deuxième ligne de transfert 27 comprend un deuxième dispositif à effet Venturi 28 conçu pour aspirer du liquide de traitement de l'autre des première et deuxième cuves principales 12, 13 et pour refouler le liquide de traitement aspiré vers l'une des première et deuxième cuves principales 12, 13 au moyen du deuxième injecteur 31 ( [Fig.1]). Les premier et deuxième dispositifs à effet Venturi 18, 28 permettent ainsi un transfert de liquide de traitement, respectivement le long de la première ligne de transfert 14 et le long de la deuxième ligne de transfert 27, entre les première et deuxième cuves principales 12, 13 dans un sens opposé, l'un de la première vers la deuxième cuve principale 12, 13, l'autre de la deuxième vers la première cuve principale 13, 12. Par exemple, le deuxième dispositif à effet Venturi 28 est conçu pour aspirer du liquide de traitement de la deuxième cuve principale 13 et le refouler vers la première cuve principale 12.

Le deuxième dispositif à effet Venturi 28 comprend une deuxième entrée 29, une deuxième sortie 30 et le deuxième injecteur 31 conçu pour injecter du liquide à travers le deuxième dispositif à effet Venturi 28 vers la deuxième sortie 30. La deuxième entrée 29 est reliée à l'autre des première et deuxième cuves principales 12, 13, tandis que la deuxième sortie 30 est reliée à l'une des première et deuxième cuves principales 12, 13. Les première et deuxième entrées 19, 29 ne sont donc pas reliées à la même des première et deuxième cuves principales 12, 13. De même les première et deuxième sorties 20, 30 ne sont pas reliées à la même des première et deuxième cuves principales 12, 13. Aussi, si la première entrée 19 et la première sortie 20 sont respectivement reliées à la première cuve principale 12 et à la deuxième cuve principale 13, la deuxième entrée 29 et la deuxième sortie 30 sont respectivement reliées à la deuxième cuve principale 13 et à la première cuve principale 12. Par exemple, la deuxième entrée 29 est reliée à la deuxième cuve principale 13, tandis que la deuxième sortie 30 est reliée à la première cuve principale 12.

Le deuxième dispositif à effet Venturi 28 est conçu pour créer une dépression aspirant le liquide de traitement de l'autre des première et deuxième cuves principales 12, 13 par la deuxième entrée 29 et le refoulant par la deuxième sortie 30, lorsque le deuxième injecteur 31 injecte du liquide à travers le deuxième dispositif à effet Venturi 28 en direction de la deuxième sortie 30. Pour cela, le deuxième dispositif à effet Venturi 28 présente notamment une portion de tube convergente depuis la deuxième entrée 29 vers une portion rétrécie et une portion divergente depuis la portion rétrécie vers la deuxième sortie 30, le deuxième injecteur 31 étant agencé entre la première entrée 19 et la portion rétrécie.

Dans la suite de la description, les termes « amont » et « aval » tiennent compte du sens de circulation du liquide dans le circuit de liquide 11, qui est imposé le deuxième dispositif à effet Venturi 28.

L'une 17b des premières lignes de refoulement 17a-17f, dite deuxième ligne d'injection, relie la sortie 24 de la première pompe 22 au deuxième injecteur 31 du deuxième dispositif à effet Venturi 28. La première pompe 22 peut ainsi aspirer du liquide de traitement provenant de la première cuve principale 12 pour le refouler vers le deuxième injecteur 31 du deuxième dispositif à effet Venturi 28, qui injecte alors le liquide de traitement refoulé par la première pompe 22 dans le deuxième dispositif à effet Venturi 28. Cette injection provoque, le long de la deuxième ligne de transfert 27 une aspiration de liquide de traitement provenant de l'autre des première et deuxième cuves principales 12, 13 pour le refouler vers l'une des première et deuxième cuves principales 12, 13.

Ainsi, l'un des premier et deuxième dispositifs à effet Venturi 18, 28 permet d'assurer un transfert de liquide de traitement de la première cuve principale 12 à la deuxième cuve principale 13, tandis que l'autre des premier et deuxième dispositifs à effet Venturi 18, 28 permet d'assurer un transfert de liquide de traitement de la deuxième cuve principale 13 à la première cuve principale 12. Le liquide de traitement circule donc en sens inverse dans les première et deuxième lignes de transfert 14, 27.

Dans la suite de la description, sans que cela soit limitatif, le système de pulvérisation 10 sera décrit en considérant la première entrée 19 comme étant reliée à la première cuve principale 12, la première sortie 20 comme étant reliée à la deuxième cuve principale 13, la deuxième entrée 29 comme étant reliée la deuxième cuve principale 13, et la deuxième sortie 30 comme étant reliée à la première cuve principale 12, le liquide de traitement circulant ainsi le long de la première ligne de transfert 14, sous l'effet du premier dispositif à effet Venturi 18, de la première cuve principale 12 à la deuxième cuve principale 13, et le long de la deuxième ligne de transfert 27, sous l'effet du deuxième dispositif à effet Venturi 28, de la deuxième cuve principale 13 à la première cuve principale 12.

Le circuit de liquide 11 peut encore comprendre des deuxièmes moyens de réduction de débit de liquide de traitement circulant dans la deuxième ligne de transfert 27.

Selon le mode de réalisation représenté sur les figures 1 à 7, le circuit de liquide 11 comprend ainsi une deuxième ligne de dérivation 32 reliant la deuxième ligne d'injection 17b à la première cuve principale 12 et comprenant une deuxième vanne de dérivation 33 conçue pour ouvrir et pour fermer la deuxième ligne de dérivation 32.

De cette manière, lorsque la deuxième ligne de dérivation 32 est fermée, tout le liquide refoulé par la première pompe 22 et circulant dans la deuxième ligne d'injection 17b est conduit au deuxième injecteur 31 du deuxième dispositif à effet Venturi 28 où il est injecté dans le deuxième dispositif à effet Venturi 28 et provoque une aspiration et un refoulement du liquide de traitement de la deuxième cuve principale 13 vers la première cuve principale 12. Tout le liquide refoulé par la première pompe 22 et circulant dans la deuxième ligne d'injection 17b étant conduit au deuxième injecteur 31 et injecté dans le deuxième dispositif à effet Venturi 28, la quantité de liquide de traitement aspiré et refoulé par le deuxième dispositif à effet Venturi 28 est maximale.

Au contraire, lorsque la deuxième ligne de dérivation 32 est ouverte, une partie du liquide refoulé par la première pompe 22 et circulant dans la deuxième ligne d'injection 17b est déviée vers la première cuve principale 12, de sorte que seule une partie du liquide refoulé par la première pompe 22 est conduite au deuxième injecteur 31 et injecté dans le deuxième dispositif à effet Venturi 28. La quantité de liquide de traitement aspiré et refoulé par le deuxième dispositif à effet Venturi 28 est donc moindre.

La deuxième ligne de dérivation 32 et la deuxième vanne de dérivation 33 permettent ainsi d'obtenir un transfert de liquide de traitement de la deuxième cuve principale 13 à la première cuve principale 12 à au moins deux vitesses : un transfert plus rapide lorsque la deuxième ligne de dérivation 32 est fermée et un transfert plus lent lorsque la deuxième ligne de dérivation 32 est ouverte.

La deuxième vanne de dérivation 33 est par exemple conçue pour occuper une position ouverte dans laquelle la deuxième vanne de dérivation 33 autorise du liquide à circuler vers la deuxième ligne de dérivation 32, et une position fermée dans laquelle la deuxième vanne de dérivation 33 empêche du liquide de circuler vers la deuxième ligne de dérivation 32 (figures 1 à 4). Lorsque la deuxième vanne de dérivation 33 occupe sa position ouverte, la deuxième ligne de dérivation 32 est ouverte. Lorsque la deuxième vanne de dérivation 33 occupe sa position fermée, la deuxième ligne de dérivation 32 est fermée. Le transfert de la deuxième cuve principale 13 à la première cuve principale 12 est alors à deux vitesses : un transfert plus rapide lorsque la deuxième vanne de dérivation 33 occupe sa position fermée et un transfert plus lent lorsque la deuxième vanne de dérivation 33 occupe sa position ouverte.

En variante ([Fig.5] et 6), la deuxième vanne de dérivation 33 est conçue pour occuper une première position dans laquelle la deuxième vanne de dérivation 33 met en communication la sortie 24 de la première pompe 22 avec la deuxième ligne de dérivation 32, et une deuxième position dans laquelle la deuxième vanne de dérivation 33 met en communication la sortie 24 de la première pompe 22 avec le deuxième injecteur 31. La deuxième vanne de dérivation 33 est par exemple une vanne à trois voies. Lorsque la deuxième vanne de dérivation 33 occupe sa première position, la deuxième ligne de dérivation 32 est ouverte et le transfert de la deuxième cuve principale 13 à la première cuve principale 12 est plus lent. Lorsque la deuxième vanne de dérivation 33 occupe sa deuxième position, la deuxième ligne de dérivation 32 est fermée et le transfert de la deuxième cuve principale 13 à la première cuve principale 12 est plus rapide.

La deuxième ligne de dérivation 32 peut en outre comprendre une deuxième restriction 331 agencée en aval de la deuxième vanne de dérivation 33 (figures 1, 5 et 6). La deuxième restriction 331 crée une perte de charge en aval de la deuxième vanne de dérivation 33, de manière à éviter que la deuxième ligne de dérivation 32 prélève tout ou en grande partie le liquide provenant de la première pompe 22, lorsque la deuxième vanne de dérivation 33 occupe sa position ouverte ou sa première position. La deuxième restriction 331 permet ainsi de s'assurer que suffisamment de liquide de traitement parvient au deuxième injecteur 31 pour être injecté dans le deuxième dispositif à effet Venturi 28, lorsque la deuxième vanne de dérivation 33 occupe sa position ouverte ou sa première position, et donc que le transfert de la deuxième cuve principale 13 à la première cuve principale 12 ne s'arrête pas. Le dimensionnement de la deuxième restriction 331 est par exemple déterminé de manière expérimentale.

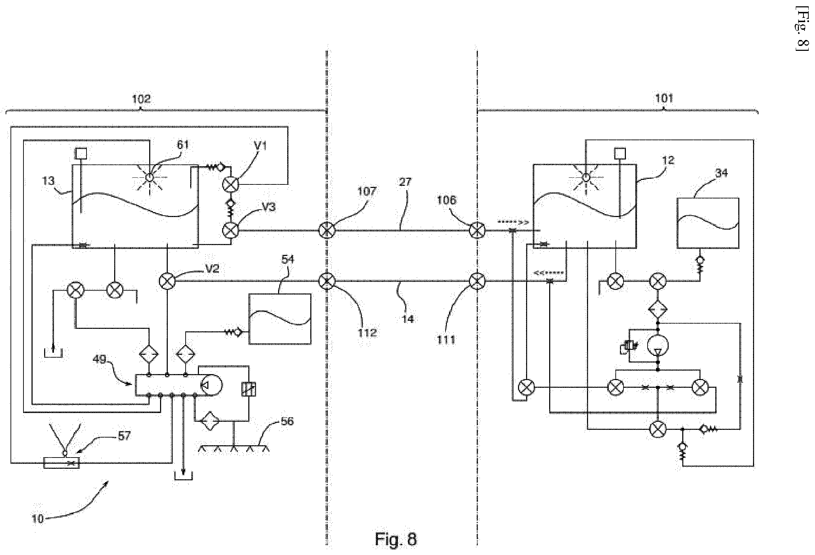

Une variante est représentée en [Fig.8]. S'agissant des premiers moyens de réduction de débit de liquide de traitement circulant dans la première ligne de transfert 14 d'entre les premières et deuxième cuves principales (autrement dit les cuves avant et arrière), en lieu et place de l'ensemble composé de la première ligne de dérivation 25 alimentée par la deuxième vanne de dérivation 26 qui est couplée à la première restriction 261, le mode de la réalisation de la [Fig.8] présente une deuxième vanne à débit réglable V2 positionnée dans la première ligne de transfert 14. S'agissant des deuxièmes moyens de réduction de débit de liquide de traitement circulant dans la deuxième ligne de transfert 27, en lieu et place de l'ensemble composé de la deuxième ligne de dérivation 32 alimentée par la troisième vanne de dérivation 33 qui est couplée à la deuxième restriction 331, le mode de réalisation de la [Fig.8] présente une troisième vanne à débit réglable V3 positionnée dans la deuxième ligne de transfert 27.

Toujours en référence au mode de réalisation de la [Fig.8], il est également possible, optionnellement, de remplacer la huitième vanne 63 par une première vanne à débit réglable V1. Toutefois, un mode de réalisation alternatif non représenté comprend des vannes à débit réglables V2 et V3 associées à une troisième vanne de type vanne trois voies telle que la huitième vanne 63, à débit non réglable, à la place de la première vanne à débit réglable V1, sans que cela ne remette en cause le principe de fonctionnement de ce mode de réalisation décrit ci-après en regard de la [Fig.8]. Dans ce cas, la première vanne est simplement configurée pour transférer du produit issu de depuis la trémie 58, via le deuxième système de pompage 49, soit vers la première cuve principale 12, soit vers la deuxième cuve principale 13. Si la troisième vanne V1 est une vanne à débit réglable, cela peut permettre de mettre en œuvre via cette première vanne à débit réglable V1 une boucle fermée d'asservissement permettant de prévenir, notamment par l'intermédiaire d'une interface homme-machine configurée à cet effet, l'utilisateur de ce que la vanne V1 est dans une position inadaptée, susceptible d'engendrer une contamination du circuit de liquide 11.

La deuxième vanne à débit réglable V2 présente une première position dans laquelle la totalité du débit liquide de traitement dans la première ligne de transfert 14est transféré de la première cuve principale 12 vers la deuxième cuve principale 13.

Dans la deuxième position de la deuxième vanne à débit réglable V2, la deuxième vanne à débit réglable V2 est configurée pour transférer une fraction prédéfinie du débit de liquide de traitement dans la première ligne de transfert 14, et non la totalité, de la première cuve principale 12 vers la deuxième cuve principale 13, le reste étant refoulé.

Dans la troisième et dernière position de la deuxième vanne à débit réglable V2, optionnelle, la totalité du débit de liquide de traitement circulant dans la première ligne de transfert 14 est transféré directement vers le deuxième système de pompage 49, notamment en vue d'être pulvérisé via la rampe de pulvérisation 56, la deuxième vanne à débit réglable V2 étant alors configurée pour ne pas transférer de liquide de traitement vers la deuxième cuve principale 13.

De façon similaire, la troisième vanne à débit réglable V3 présente une première position, une deuxième position et, optionnellement, une troisième position. Dans la première position, la troisième vanne à débit réglable V3 transfère la totalité du débit de liquide de traitement circulant dans la deuxième ligne de transfert 27 de la deuxième cuve principale 13 vers la première cuve principale 12. Dans la deuxième position de la troisième vanne à débit réglable V3, intermédiaire, une fraction prédéfinie du débit de liquide de traitement circulant dans la deuxième ligne de transfert 27est transférée de la deuxième cuve principale 13 vers la première cuve principale 12, le reste étant refoulé vers la deuxième cuve principale 13. Dans la troisième position, optionnelle, la totalité du débit de liquide de traitement circulant dans la deuxième ligne de transfert 27 est refoulé vers la deuxième cuve principale 13 et provient de la vanne V1.

En variante (non illustrée), la deuxième vanne de dérivation 33 est conçue pour s'ouvrir et se fermer entre une position d'ouverture maximale et une position fermée. Lorsque la deuxième vanne de dérivation 33 occupe sa position d'ouverture maximale et toute position entre la position d'ouverture maximale et la position fermée, la deuxième ligne de dérivation 32 est ouverte. Lorsque la deuxième vanne de dérivation 33 occupe sa position fermée, la deuxième ligne de dérivation 32 est fermée. Le transfert de la deuxième cuve principale 13 à la première cuve principale 12 est alors à plus de deux vitesses : un transfert plus rapide lorsque la deuxième vanne de dérivation 33 occupe sa position fermée et un transfert de plus en plus lent à mesure que la deuxième vanne de dérivation 33 s'ouvre jusqu'à atteindre la position d'ouverture maximale.

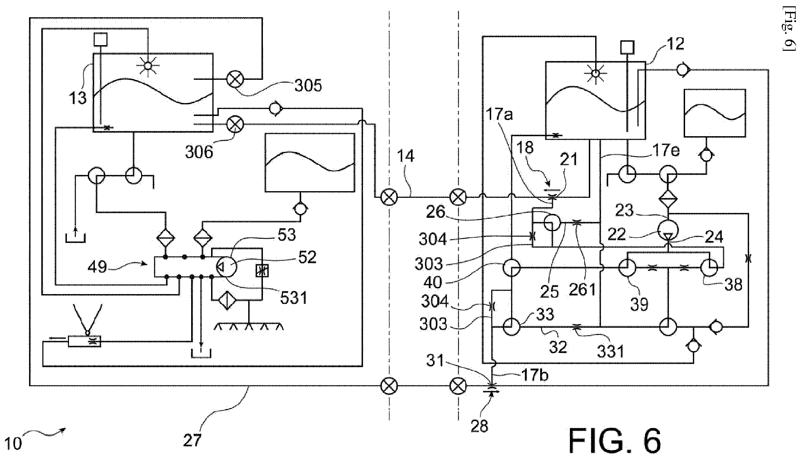

Par exemple, les première et deuxième lignes de dérivation 25, 32 se rejoignent en aval des première et deuxième vannes de dérivation 26, 33, notamment au niveau d'un point de jonction (non référencé) agencé entre chacune des première et deuxième vannes de dérivation 26, 33 et la première cuve principale 12. Les première et deuxième lignes de dérivation 25, 32 forment ainsi des lignes distinctes respectivement entre la première ligne d'injection 17a et le point de jonction et entre la deuxième ligne d'injection 17b et le point de jonction, et une même ligne entre le point de jonction et la première cuve principale 12 (figures 1 à 4). En variante (figures 5 et 6), les première et deuxième lignes de dérivation 25, 32 rejoignent, en aval des première et deuxième vannes de dérivation 26, 33, la ligne de retour en cuve principale 17e décrite ci-après. Cela permet de limiter le nombre de pièces mais aussi de trous réalisés dans la première cuve principale 12, et donc le risque de fuite.

La deuxième ligne de transfert 27 peut aussi comprendre un clapet anti-retour (non référencé) agencé en aval du deuxième dispositif à effet Venturi 28, de manière à empêcher un retour de liquide de traitement vers le deuxième dispositif à effet Venturi 28.

Comme décrit précédemment, l'une 16a des premières lignes d'aspiration 16a, 16b, dite première ligne d'aspiration de cuve principale, relie la première cuve principale 12 à l'entrée 23 de la première pompe 22, la première pompe 22 pouvant aspirer du liquide de traitement provenant de la première cuve principale 12 pour le refouler ( [Fig.1]).

Une autre 16b des premières lignes d'aspiration 16a, 16b, dite première ligne d'aspiration de rinçage, comprend par exemple une première cuve de rinçage 34 destinée à contenir de l'eau claire ([Fig.1]). La première pompe 22 peut alors aspirer de l'eau claire provenant de la première cuve de rinçage 34 pour rincer ou nettoyer le circuit de liquide 11. Un clapet anti-retour (non référencé) peut encore être prévu entre la première cuve de rinçage 34 et l'entrée 23 de la première pompe 22, de manière à empêcher un retour de liquide vers la première cuve de rinçage 34.

Comme décrit précédemment, l'une 17a des premières lignes de refoulement 17a-17f, dite première ligne d'injection, relie la sortie 24 de la première pompe 22 au premier injecteur 21 du premier dispositif à effet Venturi 18, de manière à injecter du liquide refoulé par la première pompe 22 dans le premier dispositif à effet Venturi 18 et ainsi provoquer une aspiration et un refoulement de liquide de traitement de la première cuve principale 12 par le premier dispositif à effet Venturi 18 vers la deuxième cuve principale 13 (figures 1 à 7).

Une autre 17b des premières lignes de refoulement 17a-17f, dite deuxième ligne d'injection, peut relier la sortie 24 de la première pompe 22 au deuxième injecteur 31 du deuxième dispositif à effet Venturi 28, de manière injecter du liquide refoulé par la première pompe 22 dans le deuxième dispositif à effet Venturi 28 et ainsi provoquer une aspiration et un refoulement de liquide de traitement de la deuxième cuve principale 13 par le deuxième dispositif à effet Venturi 28 vers la première cuve principale 12 (figures 1 à 6).

Une autre 17c des premières lignes de refoulement 17a-17f, dite première ligne de brassage, relie par exemple la sortie 24 de la première pompe 22 à la première cuve principale 12 ([Fig.1]). La première ligne de brassage 17c débouche notamment en partie basse de la première cuve principale 12, de manière à être immergée dans le liquide de traitement contenu dans la première cuve principale 12. La première ligne de brassage 17c peut comprendre une restriction 35 ou au moins une buse de brassage agencée dans la première cuve principale 12, notamment en partie basse de la première cuve principale 12, de manière à être immergée dans le liquide de traitement contenu dans la première cuve principale 12. La première ligne de brassage 17c peut ainsi envoyer le liquide refoulé par la première pompe 22 vers la première cuve principale 12, de manière à agiter, mélanger ou encore brasser le liquide de traitement contenu dans la première cuve principale 12. Le liquide refoulé par la première pompe 22 peut être du liquide de traitement provenant de la première ligne d'aspiration de cuve principale 16a.

Une autre 17d des premières lignes de refoulement 17a-17f, dite première ligne de rinçage de cuve principale, comprend par exemple au moins une première buse de rinçage 36 agencée à l'intérieur de la première cuve principale 12, notamment en partie haute de ladite première cuve principale 12 ([Fig.1]). La ou les premières buses de rinçage 36 sont en outre conçues pour projeter le liquide refoulé par la première pompe 22 à l'intérieur de la première cuve principale 12, notamment sur des parois de ladite première cuve principale 12. Le liquide refoulé par la première pompe 22 peut être de l'eau claire provenant de la première cuve de rinçage 34. De cette manière, la ou les premières buses de rinçage 36 permettent de rincer la première cuve principale 12.

Une autre 17e des premières lignes de refoulement 17a-17f, dite ligne de retour en cuve principale, relie par exemple la sortie 24 de la première pompe 22 à la première cuve principale 12 (figures 1, 5, 6 et 7). La ligne de retour en cuve principale 17e débouche notamment en partie basse de ladite première cuve principale 12. La ligne de retour en cuve principale 17e peut déboucher en partie basse de la première cuve principale 12 soit directement, soit au moyen d'un tuyau plongeur s'étendant dans la première cuve principale 12, depuis sa partie haute vers sa partie basse. La ligne de retour en cuve principale 17e peut ainsi envoyer le liquide refoulé par la première pompe 22 vers la première cuve principale 12, sans brasser le liquide de traitement contenu dans la première cuve principale 12. Le liquide refoulé par la première pompe 22 peut être du liquide de traitement provenant de la première ligne d'aspiration de cuve principale 16a.

Le premier ensemble de pompage 15 est par exemple conçu pour mettre en communication, via la première pompe 22, la ou l'une des premières lignes d'aspiration 16a, 16b avec la, l'un des ou des premières lignes de refoulement 17a-17f ([Fig.1]).

Le premier ensemble de pompage 15 peut être conçu pour, dans une première configuration, mettre en communication, via la première pompe 22, la première ligne d'aspiration de cuve principale 16a avec chacune des première et deuxième lignes d'injection 17a, 17b. Dans la première configuration du premier ensemble de pompage 15, du liquide de traitement circule de la première à la deuxième cuve principale 12, 13 via la première ligne de transfert 14 et de la deuxième à la première cuve principale 13, 12 via la deuxième ligne de transfert 27, de manière à obtenir une boucle de circulation continue de liquide de traitement entre les première et deuxième cuves principales 12, 13. Cette boucle de circulation continue favorise l'homogénéisation du liquide de traitement entre les première et deuxième cuves principales 12, 13, notamment lorsqu'il s'agit de bouillie, c'est-à-dire d'un mélange d'eau claire et de produit phytosanitaire, qui peut décanter.

Le premier ensemble de pompage 15 peut aussi être conçu pour :
- dans une deuxième configuration, mettre en communication, via la première pompe 22, la première ligne d'aspiration de cuve principale 16a à celle des première et deuxième lignes d'injection 17a, 17b reliée au premier ou au deuxième dispositif à effet Venturi 18, 28 aspirant du liquide de traitement de la première cuve principale 12 pour le refouler vers la deuxième cuve principale 13, ici la première ligne d'injection 17a, et avec la première ligne de brassage 17c, et/ou
- dans une troisième configuration, mettre en communication, via la première pompe 22, la première ligne d'aspiration de cuve principale 16a à celle des première et deuxième lignes d'injection 17a, 17b reliée au premier ou au deuxième dispositif à effet Venturi 18, 28 aspirant du liquide de traitement de la première cuve principale 12 pour le refouler vers la deuxième cuve principale 13, ici la première ligne d'injection 17a, et avec la ligne de retour en cuve principale17e, et/ou
- dans une quatrième configuration, mettre en communication, via la première pompe 22, la première ligne d'aspiration de rinçage 16b avec la première ligne de rinçage de cuve principale 17d,
- dans une cinquième configuration, mettre en communication, via la première pompe 22, la première ligne d'aspiration de cuve principale 16a avec la première ligne de rinçage de cuve principale 17d.

Ainsi, dans la deuxième configuration du premier ensemble de pompage 15, la première ligne d'aspiration de cuve principale 16a communique avec la première ligne d'injection 17a et la première ligne de brassage 17c. Une partie du liquide de traitement de la première cuve principale 12, qui est refoulé par la première pompe 22, est alors dirigé vers la première ligne d'injection 17a, de manière à l'injecter dans le premier dispositif à effet Venturi 18 et à provoquer, le long de la première ligne de transfert 14, une aspiration et un refoulement de liquide de traitement de la première cuve principale 12 vers la deuxième cuve principale 13. Une autre partie du liquide de traitement de la première cuve principale 12, qui est refoulé par la première pompe 22, est dirigé vers la première ligne de brassage 17c pour brasser le liquide de traitement dans la première cuve principale 12.

Dans la troisième configuration du premier ensemble de pompage 15, la première ligne d'aspiration de cuve principale 16a communique avec la première ligne d'injection 17a et la ligne de retour en cuve principale 17e. L'autre partie du liquide de traitement de la première cuve principale 12, qui est refoulé par la première pompe 22, est alors dirigé vers la ligne de retour en cuve principale 17e pour retourner le liquide de traitement dans la première cuve principale 12, sans le brasser.

Dans la quatrième configuration du premier ensemble de pompage 15, la première ligne d'aspiration de rinçage 16b communique avec la première ligne de rinçage de cuve principale 17d. L'eau claire de la première cuve de rinçage 34, qui est refoulée par la première pompe 22, est alors dirigé vers la première ligne de rinçage de cuve principale 17d, de manière à rincer la première cuve principale 12 à l'eau claire provenant de la première cuve de rinçage 34.

Dans la cinquième configuration du premier ensemble de pompage 15, la première ligne d'aspiration de cuve principale 16a communique avec la première ligne de rinçage de cuve principale 17d. Cette cinquième configuration sert par exemple lorsque la première cuve principale 12 est remplie de liquide de traitement dilué à l'eau claire, qui est refoulée par la première pompe 22 et dirigé vers la première ligne de rinçage de cuve principale 17d, de manière à rincer la première cuve principale 12.

Bien sûr, d'autres configurations du premier ensemble de pompage 15 sont possibles.

Plus précisément, le premier ensemble de pompage 15 peut être conçu pour sélectivement mettre en communication l'une des premières lignes d'aspiration 16a, 16b avec l'entrée 23 de la première pompe 22. De cette manière, la première pompe 22 peut sélectivement aspirer :
- du liquide de traitement de la première cuve principale 12 via la première ligne d'aspiration de cuve principale 16a, ou
- de l'eau claire de la première cuve de rinçage 34 via la première ligne d'aspiration de rinçage 16b.

Pour cela, le premier ensemble de pompage 15 comprend par exemple une première vanne 37 conçue pour dans une première position, mettre en communication la première ligne d'aspiration de cuve principale 16a avec l'entrée 23 de la première pompe 22, et dans une deuxième position, mettre en communication la première d'aspiration de rinçage 16b avec l'entrée 23 de la première pompe 22.

De cette manière, dans la première position de la première vanne 37, la première pompe 22 est alimentée par la première cuve principale 12 en liquide de traitement. Dans la deuxième position de la première vanne 37, la première pompe 22 est alimentée par la première cuve de rinçage 34 en eau claire.

Ainsi, dans la première et/ou la deuxième et/ou la troisième et/ou la cinquième configuration du premier ensemble de pompage 15, la première vanne 37 occupe la première position. Dans la quatrième configuration du premier ensemble de pompage 15, la première vanne 37 occupe la deuxième position.

La première vanne 37 est par exemple une vanne à trois voies. La première vanne 37 peut être à commande électrique, pneumatique, notamment au moyen d'un circuit pneumatique lui-même piloté électriquement, ou manuelle. D'autres types de commande peuvent aussi être mis en œuvre.

En variante (non représentée) à la première vanne 37, le premier ensemble de pompage 15 comprend une ou plusieurs vannes d'aspiration par l'intermédiaire desquelles chacune des premières lignes d'aspiration 16a, 16b est reliée à l'entrée 23 de la première pompe 22. La ou les vannes d'aspiration sont conçues pour ouvrir et pour fermer chacune des premières lignes d'aspiration 16a, 16b. Une vanne d'aspiration distincte peut être prévue pour chacune des premières lignes d'aspiration 16a, 16b. Une vanne d'aspiration à multivoies commune peut en variante être prévue pour toutes ou pour plusieurs des premières lignes d'aspiration 16a, 16b. Encore en variante (non représentée), le premier ensemble de pompage 15 comprend un collecteur d'alimentation tel que celui du deuxième ensemble de pompage 49 décrit ci-après.

Le premier ensemble de pompage 15 peut encore être conçu pour sélectivement mettre en communication la sortie 24 de la première pompe 22 avec l'une des ou des premières lignes de refoulement 17a-17f. De cette manière, la première pompe 22 peut sélectivement refouler du liquide :
- vers la première ligne d'injection 17a et le premier dispositif à effet Venturi 18, et/ ou
- vers la deuxième ligne d'injection 17b et le deuxième dispositif à effet Venturi 28, et/ ou
- vers la première ligne de brassage 17c, et/ou
- vers la première ligne de rinçage de cuve principale 17d et vers la ou les premières buses de rinçage 36, et/ou
- vers la ligne de retour en cuve principale 17e.

Pour cela, le premier ensemble de pompage 15 comprend par exemple une deuxième, une troisième, une quatrième et une cinquième vannes 38, 39, 40, 41.

La deuxième vanne 38 est conçue pour, dans une première position, mettre en communication la sortie 24 de la première pompe 22 avec celle des première et deuxième lignes d'injection 17a, 17b reliée au premier ou au deuxième dispositif à effet Venturi 18, 28 aspirant du liquide de traitement de la première cuve principale 12 pour le refouler vers la deuxième cuve principale 13, ici la première ligne d'injection 17a, et dans une deuxième position, mettre en communication la sortie 24 de la première pompe 22 avec la cinquième vanne 41.

La troisième vanne 39 est conçue pour, dans une première position, mettre en communication la sortie 24 de la première pompe 22 avec la quatrième vanne 40, et dans une deuxième position, mettre en communication la sortie 24 de la première pompe 22 avec la cinquième vanne 41.

Une restriction (non référencée) est par exemple prévue entre chacune des deuxième et troisième vannes 38, 39 et la quatrième vanne 40. Les restrictions créent des pertes de charge permettant de ne pas perturber le reste du circuit de liquide 11, lorsque les deuxième et troisième vannes 38, 39 passent de leur première position à leur deuxième position. Le dimensionnement des restrictions est par exemple déterminé de manière expérimentale.

La quatrième vanne 40 est conçue pour, dans une première position, mettre en communication la sortie 24 de la première pompe 22, via la troisième vanne 39 dans sa première position, avec celle des première et deuxième lignes d'injection 17a, 17b reliée au premier ou au deuxième dispositif à effet Venturi 18, 28 aspirant du liquide de traitement de la deuxième cuve principale 13 pour le refouler vers la première cuve principale 12, ici la deuxième ligne d'injection 17b, et dans une deuxième position, mettre en communication la sortie 24 de la première pompe 22, via la troisième vanne 39 dans sa première position, avec la première ligne de brassage 17c. La quatrième vanne 40 est agencée en amont de la deuxième ligne de dérivation 32.

La cinquième vanne 41 est conçue pour, dans une première position, mettre en communication la sortie 24 de la première pompe 22, via la deuxième et/ou la troisième vanne 38, 39 dans sa ou leur deuxième position, avec la première ligne de rinçage de cuve principale 17d, et dans une deuxième position, mettre en communication la sortie 24 de la première pompe 22, via la deuxième et/ou la troisième vanne 38, 39 dans sa ou leur deuxième position, avec la ligne de retour en cuve principale 17e.

Les deuxième, troisième, quatrième et cinquième vannes 38, 39, 40, 41 permettent ainsi de sélectivement mettre en communication la sortie 24 de la première pompe 22 avec une ou plusieurs des premières lignes de refoulement 17a-17f. Dans la première configuration du premier ensemble de pompage 15, les deuxième, troisième et quatrième vannes 38, 39, 40 occupent leur première position. Dans la deuxième configuration du premier ensemble de pompage 15, les deuxième et troisième vannes 38, 39 occupent leur première position et la quatrième vanne 40 occupe sa deuxième position. Dans la troisième configuration du premier ensemble de pompage 15, la deuxième vanne 38 occupe sa première position et les troisième et cinquième vannes 39, 41 occupent leur deuxième position. Dans la quatrième et/ou la cinquième configuration du premier ensemble de pompage 15, les deuxième et troisième vannes 38,39 occupent leur deuxième position et la cinquième vanne 41 occupe sa première position.

La deuxième et/ou la troisième et/ou la quatrième et/ou cinquième vanne 38, 39, 40, 41 sont par exemple des vannes à trois voies. La deuxième et/ou la troisième et/ou la quatrième et/ou cinquième vanne 38, 39, 40, 41 peuvent être à commande électrique. En variante, la deuxième et/ou la troisième et/ou la quatrième et/ou cinquième vanne 38, 39, 40, 41 sont à commande pneumatique, notamment au moyen d'un circuit pneumatique lui-même piloté électriquement, ou encore manuelle. D'autres types de commande peuvent aussi être mis en œuvre.

En variante (non représentée) aux deuxième, troisième, quatrième et cinquième vannes 38, 39, 40, 41, le premier ensemble de pompage 15 comprend une ou plusieurs vannes de refoulement par l'intermédiaire desquelles chacune des premières lignes de refoulement 17a-17f est reliée à la sortie 24 de la première pompe 22. La ou les vannes de refoulement sont conçues pour ouvrir et pour fermer chacune des premières lignes de refoulement 17a-17f. Une vanne de refoulement distincte peut être prévue pour chacune des premières lignes de refoulement 17a-17f. Une vanne de refoulement à multivoies commune peut en variante être prévue pour toutes ou pour plusieurs des premières lignes de refoulement 17a-17f. La ou les vannes de refoulement peuvent être des vannes de régulation. Encore en variante (non représentée), le deuxième ensemble de pompage 36 comprend un collecteur de distribution tel que celui du deuxième ensemble de pompage 49 décrit ci-après.

La première ligne de rinçage de cuve principale 17d peut comprendre une voie principale 42 reliant la cinquième vanne 41 à la ou aux premières buses de rinçage 36, ainsi qu'une voie de retour 43 reliant la cinquième vanne 41 à l'entrée 24 de la première pompe 22, en parallèle de la voie principale 42. La voie de retour 43 permet par exemple de limiter la quantité d'eau claire pompée par la première pompe 22 via la première ligne d'aspiration de rinçage 16b. La première cuve de rinçage 34 se vide donc plus lentement et le rinçage de la première cuve principale 12 peut durer plus longtemps, le rendant ainsi plus efficace. Un clapet anti-retour (non référencé) est par exemple prévu le long de chacune des voies principale 42 et de retour 43, de manière à empêcher une circulation de liquide dans chacune desdites voies principale 42 et de retour 43 vers la cinquième vanne 41. Une restriction (non référencée) peut être prévue le long de la voie principale 42, par exemple entre le clapet anti-retour de ladite voie principale 42 et la ou les premières buses de rinçage 36, et/ou le long de la voie de retour 43.

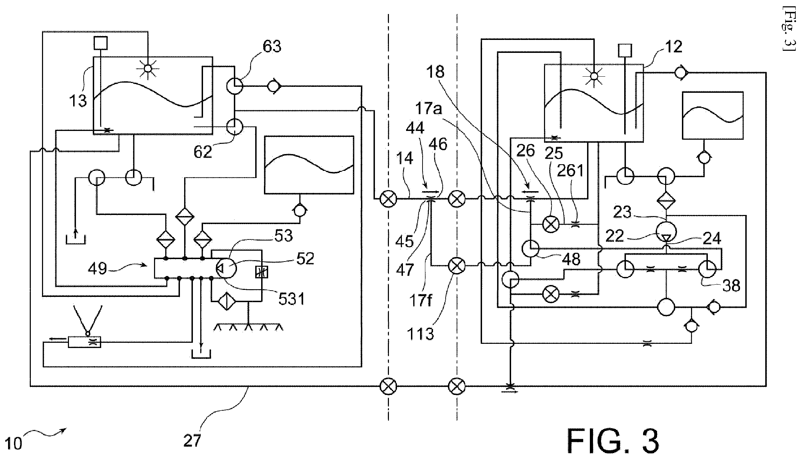

La première ligne de transfert 14 peut aussi comprendre un troisième dispositif à effet Venturi 44 conçu pour aspirer du liquide de traitement de la deuxième cuve principale 13 et pour refouler le liquide de traitement aspiré vers la première cuve principale 12 au moyen d'un troisième injecteur 47 (figures 3, 4 et 7). Les premier et troisième dispositifs à effet Venturi 18, 44 permettent ainsi un transfert de liquide de traitement le long de la première ligne de transfert 14 entre les première et deuxième cuves principales 12, 13 dans un sens opposé, le premier dispositif à effet Venturi 18 de la première vers la deuxième cuve principale 12, 13, le troisième dispositif à effet Venturi 44 de la deuxième vers la première cuve principale 13, 12.

Le troisième dispositif à effet Venturi 44 comprend une troisième entrée 45, une troisième sortie 46 et le troisième injecteur 47 conçu pour injecter du liquide à travers le troisième dispositif à effet Venturi 44 vers la troisième sortie 46. La troisième entrée 45 est reliée à la deuxième cuve principale 13, tandis que la troisième sortie 46 est reliée à la première cuve principale 12. Autrement dit, les première et troisième entrées 19, 45 ne sont pas reliées à la même des première et deuxième cuves principales 12, 13. De même les première et troisième sorties 20, 46 ne sont pas reliées à la même des première et deuxième cuves principales 12, 13.

Le troisième dispositif à effet Venturi 44 peut être agencé en amont ou en aval du premier dispositif à effet Venturi 18, de sorte que la troisième entrée 45 ou la troisième sortie 46 peut être reliée à la première ou la deuxième cuve principale 12, 13 par l'intermédiaire du premier dispositif à effet Venturi 18.

Le troisième dispositif à effet Venturi 44 est conçu pour créer une dépression aspirant le liquide de traitement de la deuxième cuve principale 13 par la troisième entrée 45 et le refoulant par la troisième sortie 46, lorsque le troisième injecteur 47 injecte du liquide à travers le troisième dispositif à effet Venturi 44 en direction de la troisième sortie 46. Pour cela, le troisième dispositif à effet Venturi 44 présente notamment une portion de tube convergente depuis la troisième entrée 45 vers une portion rétrécie et une portion divergente depuis la portion rétrécie vers la troisième sortie 46, le troisième injecteur 47 étant agencé entre la troisième entrée 45 et la portion rétrécie.

Une 17f des premières lignes de refoulement 17a-17f, dite troisième ligne d'injection, relie la sortie 24 de la première pompe 22 au troisième injecteur 47 du troisième dispositif à effet Venturi 44. La première pompe 22 peut ainsi aspirer du liquide de traitement provenant de la première cuve principale 12 pour le refouler vers le troisième injecteur 47 du troisième dispositif à effet Venturi 44, qui injecte alors le liquide de traitement refoulé par la première pompe 22 dans le troisième dispositif à effet Venturi 44. Cette injection provoque, le long de la première ligne de transfert 14, une aspiration de liquide de traitement provenant de la deuxième cuve principale 13 pour le refouler vers la première cuve principale 12.

Le premier ensemble de pompage 15 peut encore être conçu pour, dans une sixième configuration, mettre en communication, via la première pompe 22, la première ligne d'aspiration de cuve principale 16a avec la troisième ligne d'injection 17f et avec la première ligne de brassage 17c.

Le premier ensemble de pompage 15 peut encore être conçu pour, dans une septième configuration, mettre en communication, via la première pompe 22, la première ligne d'aspiration de cuve principale 16a avec la troisième ligne d'injection 17f et avec la ligne de retour en cuve principale17e.

Pour cela, le premier ensemble de pompage 15 peut comprendre une sixième vanne 48 conçue pour, dans une première position, mettre en communication la sortie 24 de la première pompe 22, via la deuxième vanne 38 dans sa première position, avec la première ligne d'injection 17a, et dans une deuxième position, mettre en communication la sortie 24 de la première pompe 22, via la deuxième vanne 38 dans sa première position, avec la troisième ligne d'injection 17f. La sixième vanne 48 est agencée en amont de la première ligne de dérivation 25.

De cette manière, la sixième vanne 48 permet de sélectivement mettre en communication la sortie 24 de la première pompe 22, via la deuxième vanne 38 dans sa première position, avec la première ou la troisième ligne d'injection 17a, 17f, et donc de sélectivement transférer, le long de la première ligne de transfert 14, du liquide de traitement de la première ou de la deuxième cuve principale 12, 13 à la deuxième ou à la première cuve principale 13, 12. Dans la première et/ou la deuxième et/ou la troisième configuration du premier ensemble de pompage 15, la sixième vanne 48 occupe sa première position. Dans la sixième et/ou la septième configuration du premier ensemble de pompage 15, la sixième vanne 48 occupe sa deuxième position.

La sixième vanne 48 est par exemple une vanne à trois voies. La sixième vanne 48 peut être à commande électrique. En variante, la sixième vanne 48 est à commande pneumatique, notamment au moyen d'un circuit pneumatique lui-même à commande électrique, ou encore manuelle. D'autres types de commande peuvent aussi être mis en œuvre.

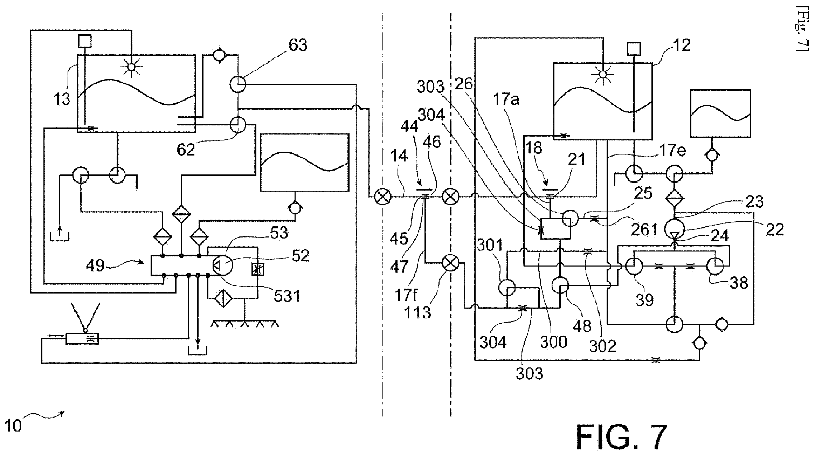

Le circuit de liquide 11 peut encore comprendre une troisième ligne de dérivation 300 reliant la troisième ligne d'injection 17f à la première cuve principale 12 et comprenant une troisième vanne de dérivation 301 conçue pour ouvrir et pour fermer la troisième ligne de dérivation 300 ([Fig.7]).

De cette manière, lorsque la troisième ligne de dérivation 300 est fermée, tout le liquide refoulé par la première pompe 22 et circulant dans la troisième ligne d'injection 17f est conduit au troisième injecteur 47 du troisième dispositif à effet Venturi 44 où il est injecté dans le troisième dispositif à effet Venturi 44 et provoque, le long de la première ligne de transfert 14, une aspiration et un refoulement du liquide de traitement de la deuxième cuve principale 13 vers la première cuve principale 12. Tout le liquide refoulé par la première pompe 22 et circulant dans la troisième ligne d'injection 17f étant conduit au troisième injecteur 47 et injecté dans le troisième dispositif à effet Venturi 44, la quantité de liquide de traitement aspiré et refoulé par le troisième dispositif à effet Venturi 44 est maximale.

Au contraire, lorsque la troisième ligne de dérivation 300 est ouverte, une partie du liquide refoulé par la première pompe 22 et circulant dans la troisième ligne d'injection 17f est déviée vers la première cuve principale 12, de sorte que seule une partie du liquide refoulé par la première pompe 22 est conduite au troisième injecteur 47 et injecté dans le troisième dispositif à effet Venturi 44. La quantité de liquide de traitement aspiré et refoulé par le troisième dispositif à effet Venturi 44 est donc moindre.

La troisième ligne de dérivation 300 et la troisième vanne de dérivation 301 permettent ainsi d'obtenir un transfert de liquide de traitement de la deuxième cuve principale 13 à la première cuve principale 12 le long de la première ligne de transfert 14 à au moins deux vitesses : un transfert plus rapide lorsque la troisième ligne de dérivation 300 est fermée et un transfert plus lent lorsque la troisième ligne de dérivation 300 est ouverte.

La troisième vanne de dérivation 301 est par exemple conçue pour occuper une position ouverte dans laquelle la troisième vanne de dérivation 301 autorise du liquide à circuler vers la troisième ligne de dérivation 300, et une position fermée dans laquelle la troisième vanne de dérivation 301 empêche du liquide de circuler vers la troisième ligne de dérivation 300. Lorsque la troisième vanne de dérivation 303 occupe sa position ouverte, la troisième ligne de dérivation 300 est ouverte. Lorsque la troisième vanne dérivation 303 occupe sa position fermée, la troisième ligne de dérivation 300 est fermée. Le transfert de la deuxième cuve principale 13 à la première cuve principale 12 le long de la première ligne de transfert 14 est alors à deux vitesses : un transfert plus rapide lorsque la troisième vanne de dérivation 301 occupe sa position fermée et un transfert plus lent lorsque la troisième vanne de dérivation 301 occupe sa position ouverte.

En variante ([Fig.7]), la troisième vanne de dérivation 301 est conçue pour occuper une première position dans laquelle la troisième vanne de dérivation 301 met en communication la sortie 24 de la première pompe 22 avec la troisième ligne de dérivation 300, et une deuxième position dans laquelle la troisième vanne de dérivation 301 met en communication la sortie 24 de la première pompe 22 avec le troisième injecteur 47. La troisième vanne de dérivation 301 est par exemple une vanne à trois voies. Lorsque la troisième vanne de dérivation 301 occupe sa première position, la troisième ligne de dérivation 300 est ouverte et le transfert est plus lent. Lorsque la troisième vanne de dérivation 301 occupe sa deuxième position, la troisième ligne de dérivation 300 est fermée et le transfert est plus rapide.

La troisième ligne de dérivation 300 peut en outre comprendre une troisième restriction 302 agencée en aval de la troisième vanne de dérivation 301. La troisième restriction 302 crée une perte de charge en aval de la troisième vanne de dérivation 301, de manière à éviter que la troisième ligne de dérivation 300 prélève tout ou en grande partie le liquide de traitement provenant de la première pompe 22, lorsque la troisième vanne de dérivation 301 occupe sa position ouverte ou sa première position. La troisième restriction 302 permet ainsi de s'assurer que suffisamment de liquide de traitement parvient au troisième injecteur 47 pour être injecté dans le troisième dispositif à effet Venturi 44, lorsque la troisième vanne de dérivation 301 occupe sa position ouverte ou sa première position, et donc que le transfert de la deuxième cuve principale 13 à la première cuve principale 12 le long de la première ligne de transfert 14 ne s'arrête pas.

En variante, la troisième vanne de dérivation 301 est conçue pour s'ouvrir et se fermer entre une position d'ouverture maximale et une position fermée. Lorsque la troisième vanne de dérivation 301 occupe sa position d'ouverture maximale et toute position entre la position d'ouverture maximale et la position fermée, la troisième ligne de dérivation 300 est ouverte. Lorsque la troisième vanne de dérivation 301 occupe sa position fermée, la première troisième ligne de dérivation 300 est fermée. Le transfert de la deuxième cuve principale 13 à la première cuve principale 12 le long de la première ligne de transfert 14 est alors à plus de deux vitesses : un transfert plus rapide lorsque la troisième vanne de dérivation 301 occupe sa position fermée et un transfert de plus en plus lent à mesure que la troisième vanne de dérivation 301 s'ouvre jusqu'à atteindre la position d'ouverture maximale.

Les première et troisième lignes de dérivation 25, 300 rejoignent par exemple, en aval des première et troisième vannes de dérivation 26, 301, la ligne de retour en cuve principale 17e ([Fig.7]). En variante, les première et troisième lignes de dérivation 25, 300 se rejoignent en aval des première et troisième vannes de dérivation 26, 301, notamment au niveau d'un point de jonction agencé entre chacune des première et troisième vannes de dérivation 26, 301 et la première cuve principale 12, notamment en parallèle de la ligne de retour en cuve principale 17e. Les première et troisième lignes de dérivation 25, 300 forment ainsi des lignes distinctes respectivement entre la première ligne d'injection 17a et le point de jonction et entre la troisième ligne d'injection 17f et le point de jonction, et une même ligne entre le point de jonction et la première cuve principale 12. Cela permet de limiter le nombre de de pièces mais aussi de trous réalisés dans la première cuve principale 12, et donc le risque de fuite.

La première ligne d'injection 17a et/ou la deuxième ligne d'injection 17b et/ou la troisième ligne d'injection 17f peuvent aussi comprendre une conduite de dérivation 303 agencée en parallèle de la première vanne de dérivation 26 ou de la deuxième vanne de dérivation 33 ou de la troisième vanne de dérivation 301 (figures 5 à 7).

La conduite de dérivation 303 peut encore comprendre une quatrième restriction 304. La quatrième restriction 304 crée une perte de charge le long de la conduite de dérivation 303, en parallèle de la première vanne de dérivation 26 ou de la deuxième vanne de dérivation 33 ou de la troisième vanne de dérivation 301. De cette manière, lorsque la première ou la deuxième ou la troisième vanne de dérivation 26, 33, 301 occupe sa deuxième position, le liquide provenant de la première pompe 22 circule à travers la première ou la deuxième ou la troisième vanne de dérivation 26, 33, 301, sans passer par la conduite de dérivation 303 du fait de la quatrième restriction 304 et des pertes de charge qu'elle induit. En revanche, lorsque la première ou la deuxième ou la troisième vanne de dérivation 26, 33, 301 occupe sa première position, le liquide provenant de la première pompe 22 est forcé de traverser l'une ou l'autre de la première ou deuxième ou troisième restriction 261, 331, 302 et de la quatrième restriction 304, ce qui permet d'éviter que la première ou la deuxième ou la troisième ligne d'injection 17a, 17b, 17f prélève plus de liquide en sortie de la première pompe 22 en première position qu'en deuxième position de la première ou de la deuxième ou de la troisième vanne de dérivation 26, 33, 301. La circulation de liquide provenant de la première pompe 22 le long des autres lignes de refoulement 17c-e ne risque donc pas d'être perturbée par les changements de position de la première ou de la deuxième ou de la troisième vanne de dérivation 26, 33, 301.

Le circuit de liquide 11 peut encore comprendre un deuxième ensemble de pompage 49, au moins une deuxième ligne d'aspiration 50a, 50b et au moins une deuxième ligne de refoulement 51a-51e ([Fig.1]).

Le deuxième ensemble de pompage 49 comprend une deuxième pompe 52 comprenant elle-même une entrée 53 par laquelle la deuxième pompe 52 aspire un liquide et une sortie 531 par laquelle la deuxième pompe 52 refoule le liquide aspiré par l'entrée 53.

Dans la suite de la description, les termes « amont » et « aval » tiennent compte du sens de circulation du liquide dans le circuit de liquide 11, qui est imposé par la deuxième pompe 52.

La ou les deuxièmes lignes d'aspiration 50a-50c sont chacune reliées, en aval, à l'entrée 53 de la deuxième pompe 52. La ou les deuxièmes lignes d'aspiration 50a-50c sont ainsi agencées en amont de la deuxième pompe 52. La deuxième pompe 52 peut ainsi aspirer du liquide dans la ou chacune des deuxièmes lignes d'aspiration 50a-50c pour le refouler. Les deuxièmes lignes d'aspiration 50a-50c sont parallèles entre elles.

La ou l'une 50a des deuxièmes lignes d'aspiration 50a-50c, dite deuxième ligne d'aspiration de cuve principale, relie la deuxième cuve principale 13 à l'entrée 53 de la deuxième pompe 52. La deuxième pompe 52 peut ainsi aspirer du liquide de traitement provenant de la deuxième cuve principale 13 pour le refouler.

Une autre 50b des deuxièmes lignes d'aspiration 50a-50c, dite deuxième ligne d'aspiration de rinçage, comprend par exemple une deuxième cuve de rinçage 54 destinée à contenir de l'eau claire. La deuxième pompe 52 peut alors aspirer de l'eau claire provenant de la deuxième cuve de rinçage 54 pour rincer ou nettoyer le circuit de liquide 11. Un clapet anti-retour (non référencé) peut encore être prévu entre la deuxième cuve de rinçage 54 et l'entrée 53 de la deuxième pompe 52, de manière à empêcher un retour de liquide vers la deuxième cuve de rinçage 54.

Une autre 50c des deuxièmes lignes d'aspiration 50a-50c, dite ligne d'aspiration externe, comprend par exemple un connecteur hydraulique d'entrée destiné à être connecté de manière réversible à une source de liquide externe au système de pulvérisation 10. La deuxième pompe 52 peut alors aspirer du liquide externe au système de pulvérisation 10.

La ou les deuxièmes lignes de refoulement 51a-51e sont chacune reliées, en amont, à la sortie 531 de la deuxième pompe 52. La ou les deuxièmes lignes de refoulement 51a-51e sont ainsi agencées en aval de la deuxième pompe 52. La deuxième pompe 52 peut ainsi refouler du liquide dans la ou chacune des deuxièmes lignes de refoulement 51a-51e. Les deuxièmes lignes de refoulement 51a-51e sont parallèles entre elles.

La ou l'une 51a au moins des deuxièmes lignes de refoulement 51a-51e, dite ligne de pulvérisation, comprend des buses de pulvérisation 55 montées sur une rampe de pulvérisation 56 du système de pulvérisation 10 et conçues pour pulvériser du liquide sur des végétaux à traiter. Lorsque la deuxième pompe 52 aspire du liquide de traitement de la deuxième cuve principale 13 et que ce liquide de traitement aspiré est refoulé dans la ou les lignes de pulvérisation 51a, les buses de pulvérisation 55 pulvérisent du liquide de traitement de la deuxième cuve principale 13. La ou chaque ligne de pulvérisation 51a peut encore être reliée, en aval, à l'entrée 53 de la deuxième pompe 52, notamment par l'intermédiaire d'une vanne de régulation (non référencée). La ou chaque ligne de pulvérisation 51a forme alors une boucle avec la deuxième pompe 52. La rampe de pulvérisation 56 s'étend par exemple suivant une direction d'extension principale horizontale, notamment globalement transversale.

Une autre 51b des deuxièmes lignes de refoulement 51a-51e, dite ligne d'incorporation, relie par exemple la sortie 531 de la deuxième pompe 52 à la deuxième cuve principale 13. La ligne d'incorporation 51b comprend un ensemble d'incorporation 57 conçu pour incorporer un produit à incorporer, tel que du produit phytosanitaire liquide ou sous forme de poudre, au liquide refoulé par la deuxième pompe 52 et circulant le long de ladite ligne d'incorporation 51b. De cette manière, la deuxième cuve principale 13 peut être remplie du liquide refoulé par la deuxième pompe 52 auquel a été incorporé le produit à incorporer. Le liquide refoulé par la deuxième pompe 52 peut être de l'eau claire provenant de la deuxième cuve de rinçage 54 via la première ligne d'aspiration de rinçage 54b ou, par l'intermédiaire du connecteur hydraulique d'entrée et via la ligne d'aspiration externe 50c, d'une source d'eau claire externe au système de pulvérisation 10.

Pour cela, l'ensemble d'incorporation 57 comprend par exemple un dispositif d'incorporation 58, notamment une trémie d'incorporation, destiné à contenir le produit à incorporer, ainsi qu'un dispositif à effet Venturi 59. Le dispositif à effet Venturi 59 est conçu pour créer une dépression aspirant le produit à incorporer contenu dans le dispositif d'incorporation 58, lorsque du liquide refoulé par la deuxième pompe 52 circule le long de la ligne d'incorporation 51b à travers le dispositif à effet Venturi 59. De cette manière, le produit aspiré par le dispositif à effet Venturi 59 est incorporé au liquide circulant le long de la ligne d'incorporation 51b à travers ledit dispositif à effet Venturi 59 pour remplir la deuxième cuve principale 13 de liquide auquel le produit a été incorporé.

Une autre 51c des deuxièmes lignes de refoulement 51a-51e, dite deuxième ligne de brassage, relie par exemple la sortie 531 de la deuxième pompe 52 à la deuxième cuve principale 13. La deuxième ligne de brassage 51c débouche notamment en partie basse de ladite deuxième cuve principale 13, de manière être immergée dans le liquide de traitement contenu dans la deuxième cuve principale 13. La deuxième ligne de brassage 51c peut comprendre une restriction 60 ou au moins une buse de brassage agencée dans la deuxième cuve principale 13, notamment en partie basse de la deuxième cuve principale 13, de manière à être immergée dans le liquide de traitement contenu dans la deuxième cuve principale 13. La deuxième ligne de brassage 51c peut ainsi envoyer le liquide refoulé par la deuxième pompe 52 vers la deuxième cuve principale 13, de manière à agiter, mélanger ou encore brasser le liquide de traitement contenu dans la deuxième cuve principale 13. Le liquide refoulé par la deuxième pompe 52 peut être du liquide de traitement provenant de la deuxième ligne d'aspiration de cuve principale 50a.

Une autre 51d des deuxièmes lignes de refoulement 51a-51e, dite deuxième ligne de rinçage de cuve principale, comprend par exemple au moins une deuxième buse de rinçage 61 agencée à l'intérieur de la deuxième cuve principale 13, notamment en partie haute de ladite deuxième cuve principale 13. La ou les deuxièmes buses de rinçage 61 sont en outre conçues pour projeter le liquide refoulé par la deuxième pompe 52 à l'intérieur de la deuxième cuve principale 13, notamment sur des parois de ladite deuxième cuve principale 13. Le liquide refoulé par la deuxième pompe 52 peut être de l'eau claire provenant de la deuxième cuve de rinçage 54. De cette manière, la ou les deuxièmes buses de rinçage 60 permettent de rincer la deuxième cuve principale 13.

Une autre 51e des deuxièmes lignes de refoulement 51a-51e, dite ligne de refoulement externe, comprend par exemple un connecteur hydraulique de sortie destiné à être connecté de manière réversible à une cuve externe au système de pulvérisation 10, de sorte à transférer le liquide refoulé par la deuxième pompe 52 vers ladite cuve externe.

En variante (non illustrée), la deuxième ligne d'injection est formée par l'une des deuxièmes lignes de refoulement 51a-51e, et non pas par l'une 17b des premières lignes de refoulement 17a-17f, et la deuxième ligne d'injection relie la sortie 531 de la deuxième pompe 52 au deuxième injecteur 31 du deuxième dispositif à effet Venturi 28. La deuxième pompe 52 peut ainsi aspirer du liquide de traitement provenant de la deuxième cuve principale 13 pour le refouler vers le deuxième injecteur 31 du deuxième dispositif à effet Venturi 28, qui injecte alors le liquide de traitement refoulé par la deuxième pompe 52 dans le deuxième dispositif à effet Venturi 28. Cette injection provoque, le long de la deuxième ligne de transfert 27, une aspiration de liquide de traitement provenant de la deuxième cuve principale 13 pour le refouler vers la première cuve principale 12. Par ailleurs, selon cette variante, la deuxième ligne de dérivation 32 relie la deuxième ligne d'injection à la deuxième cuve principale 13, et non pas à la première cuve principale 12. Ainsi, lorsque la deuxième ligne de dérivation 32 est ouverte, une partie du liquide refoulé par la deuxième pompe 52 et circulant dans la deuxième ligne d'injection est déviée vers la deuxième cuve principale 13, de sorte que seule une partie du liquide refoulé par la deuxième pompe 52 est conduite au deuxième injecteur 31 et injecté dans le deuxième dispositif à effet Venturi 28.

La première ligne de transfert 14 comprend par exemple encore une septième vanne 62 agencée ou encore installée en aval du premier dispositif à effet Venturi 18 et, le cas échéant, en amont du troisième dispositif à effet Venturi 44 (figures 1 à 5 et 7). La septième vanne 62 est conçue pour, dans une première position, mettre en communication le premier dispositif à effet Venturi 18 avec la deuxième cuve principale 13 et, le cas échéant, la deuxième cuve principale 13 avec le troisième dispositif à effet Venturi 44, et dans une deuxième position, mettre en communication le premier dispositif à effet Venturi 18 avec l'entrée 53 de la deuxième pompe 52, en contournant la deuxième cuve principale 13. La ou les deuxièmes lignes d'aspiration 50a, 50b et la première ligne de transfert 14, via la septième vanne 62, sont parallèles entre elles.

De cette manière, dans la première position de la septième vanne 62, le liquide de traitement provenant de la première cuve principale 12 peut être aspiré et refoulé par le premier dispositif à effet Venturi 18 vers la septième vanne 62 où le liquide de traitement est dirigé vers la deuxième cuve principale 13 pour l'alimenter en liquide de traitement de la première cuve principale 12. Le liquide de traitement provenant de la première cuve principale 12 vient donc s'ajouter à celui déjà contenu dans la deuxième cuve principale 13. Les liquides de traitement des première et deuxième cuves principales 13, 17 peuvent alors être les mêmes. Lorsque la septième vanne 62 occupe sa première position, le premier ensemble de pompage 15 peut notamment occuper sa première, sa deuxième ou sa troisième configuration, du liquide de traitement étant transféré de l'une à l'autre des première et deuxième cuves principales 12, 13.

Le cas échéant, dans la première position de la septième vanne 62, le liquide de traitement provenant de la deuxième cuve principale 13 peut être aspiré et refoulé par le troisième dispositif à effet Venturi 44 à travers la septième vanne 62 pour en alimenter la première cuve principale 12. Le liquide de traitement provenant de la deuxième cuve principale 13 vient donc s'ajouter à celui déjà contenu dans la première cuve principale 12. Les liquides de traitement des première et deuxième cuves principales 13, 17 peuvent alors être les mêmes. Lorsque la septième vanne 62 occupe sa première position, le premier ensemble de pompage 15 peut notamment occuper sa sixième ou sa septième configuration, du liquide de traitement étant transféré de la deuxième cuve principale 13 à la première cuve principale 12.

Dans la deuxième position de la septième vanne 62, le liquide de traitement provenant de la première cuve principale 12 est aspiré et refoulé par le premier dispositif à effet Venturi 18 vers la septième vanne 62 où le liquide de traitement de la première cuve principale 12 est dirigé vers l'entrée 53 de la deuxième pompe 52, sans passer par la deuxième cuve principale 13. La deuxième pompe 52 peut alors sélectivement aspirer du liquide de traitement de la deuxième cuve principale 13 ou du liquide de traitement de la première cuve principale 12 pour en alimenter la ou les lignes de pulvérisation 51a et les buses de pulvérisation 55 qui peuvent ainsi pulvériser du liquide de traitement de la première ou de la deuxième cuve principale 12, 13. Les liquides de traitement des première et deuxième cuves principales 12, 13 peuvent alors être différents. Lorsque la septième vanne 62 occupe sa deuxième position, le premier ensemble de pompage 15 peut notamment occuper sa deuxième ou sa troisième configuration, de sorte à empêcher tout transfert de liquide de traitement entre les première et deuxième cuves principales 12, 13 et donc tout mélange des liquides de traitement des première et deuxième cuves principales 12, 13. Les deuxièmes vannes de connexion 111, 112 décrites ci-après peuvent aussi être fermées.

La septième vanne 62 peut encore être conçue pour, dans une troisième position, fermer la première ligne de transfert 14. Dans cette troisième position, la première ligne de transfert 14 ne peut donc alimenter en liquide de traitement provenant de la deuxième cuve principale 13, ni la première cuve principale 12, ni l'entrée 53 de la deuxième pompe 52, en contournant la deuxième cuve principale 13.

La septième vanne 62 est par exemple une vanne à trois voies. La septième vanne 62 peut être à commande électrique. En variante, la septième vanne 62 est à commande pneumatique, notamment au moyen d'un circuit pneumatique lui-même à commande électrique, ou encore manuelle. D'autres types de commande peuvent aussi être mis en œuvre.

Le deuxième ensemble de pompage 49 est par exemple conçu pour sélectivement mettre en communication la ou l'une des deuxièmes lignes d'aspiration 50a-50c ou la première ligne de transfert 14, via la septième vanne 62, avec l'entrée 53 de la deuxième pompe 52 ([Fig.1]). De cette manière, la deuxième pompe 52 peut sélectivement aspirer :
- du liquide de traitement de la deuxième cuve principale 13 via la deuxième ligne d'aspiration de cuve principale 50a,
- le cas échéant, de l'eau claire de la deuxième cuve de rinçage 54 via la deuxième ligne d'aspiration de rinçage 50b,
- le cas échéant, du liquide externe au système de pulvérisation 10 via la ligne d'aspiration externe 50c, notamment par l'intermédiaire du connecteur hydraulique d'entrée, ou
- du liquide de traitement de la première cuve principale 12 via la première ligne de transfert 14, lorsque la septième vanne 62 occupe la première position et que le premier dispositif à effet Venturi 18 aspire et refoule du liquide de traitement de la première cuve principale 12, le premier ensemble de pompage 15 occupant notamment sa deuxième ou sa troisième configuration.

Le deuxième ensemble de pompage 49 peut encore être conçu pour sélectivement mettre en communication la sortie 531 de la deuxième pompe 52 avec l'une des ou des deuxièmes lignes de refoulement 51a-51e. De cette manière, la deuxième pompe 52 peut sélectivement refouler du liquide :
- vers la ou les lignes de pulvérisation 51a et les buses de pulvérisation 55, et/ou
- vers la ligne d'incorporation 51b et l'ensemble d'incorporation 57, et/ou
- vers la deuxième ligne de brassage 51c, et/ou
- vers la deuxième ligne de rinçage de cuve principale 51d et la ou les deuxièmes buses de rinçage 61,
- vers la ligne de refoulement externe 51e.

Le deuxième ensemble de pompage 49 permet ainsi de mettre en communication, par l'intermédiaire de la deuxième pompe 52, les deuxièmes lignes d'aspiration 50a, 50b et la première ligne de transfert 14, via la septième vanne 62, avec les deuxièmes lignes de refoulement 51a-51e.

Par exemple, dans une première configuration du deuxième ensemble de pompage 49, la deuxième ligne d'aspiration de cuve principale 50a communique avec la ou les lignes de pulvérisation 51a, de manière à pulvériser du liquide de traitement provenant de la deuxième cuve principale 13 ou, lorsque la septième vanne 62 occupe sa première position et que le premier dispositif à effet Venturi 18 aspire et refoule du liquide de traitement de la première cuve principale 12 vers la septième vanne 62, du liquide de traitement des première et deuxième cuves principales 12, 13. Dans cette première configuration, la deuxième ligne d'aspiration de cuve principale 50a peut en outre communiquer avec la deuxième ligne de brassage 51c, de manière à brasser le liquide de traitement dans la deuxième cuve principale 13.

Dans une deuxième configuration du deuxième ensemble de pompage 49, la première ligne de transfert 14 communique avec la ou les lignes de pulvérisation 51a, en contournant la deuxième cuve principale 13, de manière à pulvériser du liquide de traitement provenant de la première cuve principale 12, lorsque la septième vanne 62 occupe sa deuxième position et que le premier dispositif à effet Venturi 18 aspire et refoule du liquide de traitement de la première cuve principale 12 vers la septième vanne 62.

Dans une troisième configuration du deuxième ensemble de pompage 49, la deuxième ligne d'aspiration de rinçage 50b ou la ligne d'aspiration externe 50c communique avec la ligne d'incorporation 51b, de manière à incorporer du produit à incorporer à de l'eau claire provenant de la deuxième cuve de rinçage 54 ou d'une source externe d'eau claire.

Dans une quatrième configuration du deuxième ensemble de pompage 49, la deuxième ligne d'aspiration de rinçage 50b communique avec la deuxième ligne de rinçage de cuve principale 51d, de manière à rincer la deuxième cuve principale 13 à l'eau claire provenant de la deuxième cuve de rinçage 54.

Bien sûr, d'autres configurations du deuxième ensemble de pompage 49 sont possibles.

Pour cela, le deuxième ensemble de pompage 49 comprend par exemple un collecteur d'alimentation comprenant des entrées coopérant chacune avec une soupape, une vanne ou un clapet et une sortie reliée à l'entrée 53 de la deuxième pompe 52, ainsi qu'au moins un arbre à cames entraîné en rotation autour d'un axe de rotation et portant une pluralité de cames. Chacune des entrées du collecteur d'alimentation est reliée à l'une de la ou des deuxièmes lignes d'aspiration 50a-50c et de la première ligne de transfert 14, via la septième vanne 62. Les cames du ou de l'un des arbres à cames coopèrent chacune avec l'une des soupapes du collecteur d'alimentation et sont conçues pour sélectivement ouvrir et fermer lesdites soupapes, lorsque l'arbre à came tourne, de manière à mettre en communication l'une des entrées du collecteur avec l'entrée 53 de la deuxième pompe 52.

Le deuxième ensemble de pompage 49 peut aussi comprendre un collecteur de distribution comprenant lui-même une entrée reliée à la sortie 531 de la deuxième pompe 52 et des sorties coopérant chacune avec une soupape, une vanne ou un clapet. Chacune des sorties du collecteur de distribution est reliée à l'une des deuxièmes lignes de refoulement 51a-51e. Les cames du ou de l'autre arbre à cames coopèrent chacune avec l'une des soupapes du collecteur de distribution et sont conçues pour sélectivement ouvrir et fermer lesdites soupapes, lorsque l'arbre à came tourne, de manière à mettre en communication la sortie 531 de la deuxième pompe 52 avec l'une des ou des sorties du collecteur de distribution.

Un exemple d'un tel deuxième ensemble de pompage 49 est décrit dans le document WO 2016/124856 A1 au nom du Demandeur.

En variante (non représentée) du collecteur d'alimentation, le deuxième ensemble de pompage 49 comprend une ou plusieurs vannes d'aspiration par l'intermédiaire desquelles chacune de la ou des deuxièmes lignes d'aspiration 50a-50c et de la première ligne de transfert 14, via la septième vanne 62, sont reliées à l'entrée 53 de la deuxième pompe 52. La ou les vannes d'aspiration sont conçues pour ouvrir et pour fermer chacune de la ou des deuxièmes lignes d'aspiration 50a, 50b et de la première ligne de transfert 14. Une vanne d'aspiration distincte peut être prévue pour chacune de la ou des deuxièmes lignes d'aspiration 50a, 50b et de la première ligne de transfert 14. Une vanne d'aspiration à multivoies commune peut en variante être prévue pour toutes ou pour plusieurs des deuxièmes lignes d'aspiration 50a, 50b et première ligne de transfert 14.

Le circuit de liquide 11 peut aussi comprendre une vanne (non référencée) conçue pour, dans une première position, mettre en communication la deuxième ligne d'aspiration de cuve principale 50a avec l'entrée 53 de la deuxième pompe 52, et dans une deuxième position, mettre en communication la ligne d'aspiration externe 50c avec l'entrée 53 de la deuxième pompe 52. Ladite vanne permet ainsi de sélectivement alimenter la deuxième pompe 52 en liquide de traitement provenant de la deuxième cuve principale 13 ou en liquide, tel que de l'eau claire, provenant d'une source externe. La deuxième ligne d'aspiration de cuve principale 50a et la ligne d'aspiration externe 50c forment ainsi des lignes distinctes respectivement entre la deuxième ligne d'aspiration de cuve principale 50a et ladite vanne et entre la ligne d'aspiration externe 50c et ladite vanne, et une même ligne entre ladite vanne et l'entrée 53 de la deuxième pompe 52, notamment via le collecteur d'alimentation ou une vanne d'aspiration. Ladite vanne est par exemple une vanne à trois voies. Elle peut être à commande électrique.

En variante (non représentée) du collecteur de distribution, le deuxième ensemble de pompage 49 peut encore comprendre une ou plusieurs vannes de refoulement par l'intermédiaire desquelles chacune des deuxièmes lignes de refoulement 51a-51^{e} sont reliées à la sortie 531 de la deuxième pompe 52. La ou les vannes de refoulement sont conçues pour ouvrir et pour fermer chacune des deuxièmes lignes de refoulement 51a-51^{e}. Une vanne de refoulement distincte peut être prévue pour chacune des deuxièmes lignes de refoulement 51a-51^{e}. Une vanne de refoulement à multivoies commune peut en variante être prévue pour toutes ou pour plusieurs des deuxièmes lignes de refoulement 51a-51^{e}.

La ligne d'incorporation 50b peut encore comprendre une huitième vanne 63 conçue pour dans une première position, mettre en communication la sortie 531 de la deuxième pompe 52, via l'ensemble d'incorporation 57, avec la deuxième cuve principale 13, et dans une deuxième position, mettre en communication la sortie 531 de la deuxième pompe 52, via l'ensemble d'incorporation 57, avec la première ligne de transfert 14 (figures 1, 3, 5 et 7). La huitième vanne 63 est par exemple agencée en aval du premier dispositif à effet Venturi 18 et, le cas échéant, en amont du troisième dispositif à effet Venturi 44. La huitième vanne 63 peut encore être agencée entre le premier ou les premier et troisième dispositifs à effet Venturi 18, 44 et la septième vanne 62.

De cette manière, dans la première position de la huitième vanne 63, la ligne d'incorporation 51b peut remplir la deuxième cuve principale 13 de liquide refoulé par la deuxième pompe 52 auquel le produit a été incorporé. Dans la deuxième position de la huitième vanne 63, la ligne d'incorporation 51b peut remplir la première cuve principale 12 via la première ligne transfert 14, notamment lorsque le premier dispositif à effet Venturi 18 n'aspire, ni ne refoule de liquide de traitement dans la première ligne de transfert 14 et le cas échéant que la septième vanne 62 occupe la troisième position (figures 1 et 3). La ligne d'incorporation 51b peut ainsi sélectivement remplir la première ou la deuxième cuve principale 12, 13. Il n'est pas donc pas nécessaire de prévoir des lignes d'incorporation 51b différentes pour remplir les première et deuxième cuves principales 12, 13.

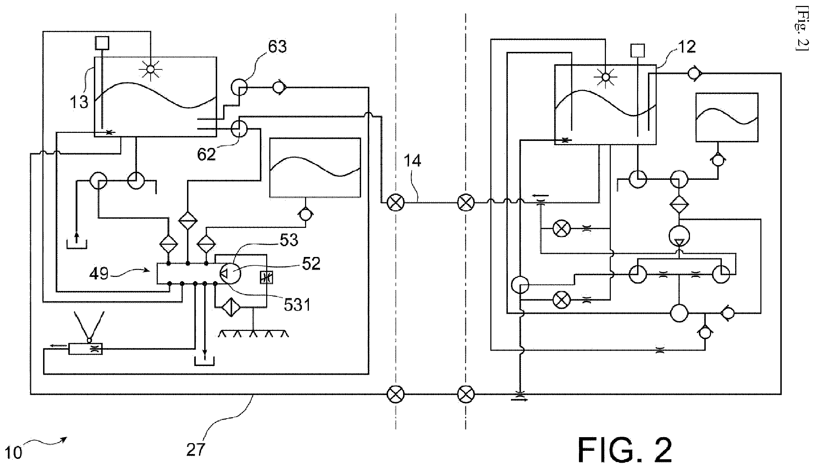

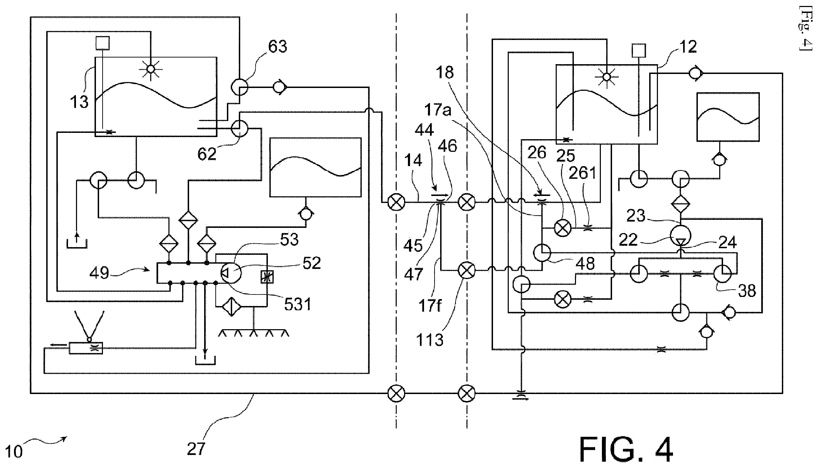

En variante, la huitième vanne 63 est conçue pour, dans la deuxième position, mettre en communication la sortie 531 de la deuxième pompe 52, via l'ensemble d'incorporation 57, avec la deuxième ligne de transfert 27 (figures 2 et 4). La huitième vanne 63 est par exemple agencée en amont du deuxième dispositif à effet Venturi 28.

De cette manière, dans la deuxième position de la huitième vanne 63, la ligne d'incorporation 51b peut remplir la première cuve principale 12 via la deuxième ligne de transfert 27 (figures 2 et 4).

Un clapet anti-retour (non référencé) peut encore être prévu entre l'ensemble d'incorporation 57 et la huitième vanne 63, de manière à empêcher un retour de liquide depuis la huitième vanne 63 vers l'ensemble d'incorporation 57.

La huitième vanne 63 est par exemple une vanne à trois voies. La huitième vanne 63 peut être à commande électrique. En variante, la huitième vanne 63 est à commande pneumatique, notamment au moyen d'un circuit pneumatique lui-même à commande électrique, ou encore manuelle. D'autres types de commande peuvent aussi être mis en œuvre.

En variante des septième et huitième vannes 62, 63 ([Fig.6]), la première ligne de transfert 14 et la deuxième ligne de transfert 27 et/ou la ligne d'incorporation 51b sont parallèles entre elles. Elles ne se rejoignent pas en amont de la deuxième cuve principale 13. Une vanne de coupure 305, 306 peut notamment être installée le long de la deuxième ligne de transfert 27, en amont du deuxième dispositif à effet Venturi 28, et/ou le long de la ligne d'incorporation 51b, en aval du dispositif d'incorporation 57, pour bloquer la circulation de liquide vers la deuxième cuve principale 13.

Le système de pulvérisation 10 comprend par exemple aussi une unité de commande 64 électronique conçue pour piloter le premier ensemble de pompage 15, la première vanne de dérivation 26 et, le cas échéant, la deuxième vanne de dérivation 33 et/ou le deuxième ensemble de pompage 49 et/ou la septième vanne 62 et/ou la huitième vanne 63 ([Fig.1]).

L'unité de commande 64 peut comprendre une interface d'entrée, une interface de sortie, une mémoire de données, une mémoire de programmes, un microprocesseur ainsi qu'au moins un bus de communication qui les connecte entre eux.

L'interface d'entrée est par exemple connectée à une interface utilisateur (non représentée) par l'intermédiaire de laquelle un agriculteur communique avec l'unité de commande 64. L'interface utilisateur peut être installée dans une cabine du tracteur ou sur le système de pulvérisation 10. Des instructions de changement de configuration pour le premier et/ou le deuxième ensemble de pompage 15, 49 et/ou de changement de position pour la septième et/ou la huitième vanne 62, 63 sont par exemple envoyées à l'unité de commande 64 par l'intermédiaire de l'interface utilisateur. L'unité de commande 64 peut alors commander le premier et/ou le deuxième ensemble de pompage 15, 49 de changer de configuration et/ou la septième et/ou la huitième vanne 62, 63 de changer de position sur la base desdites instructions.

L'interface de sortie est par exemple connectée :
- au premier ensemble de pompage 15, notamment à la première pompe 22 et/ou la première vanne 37 et/ou la deuxième vanne 38 et/ou la troisième vanne 39 et/ou la quatrième vanne 40 et/ou la cinquième vanne 41 et/ou la sixième vanne 48, et/ou
- à la première vanne de dérivation 26, et/ou
- à la deuxième vanne de dérivation 33, et/ou
- au deuxième ensemble de pompage 49, notamment à la deuxième pompe 52 et/ou à un dispositif d'entraînement en rotation du ou des arbres à cames autour de son ou de leur axe de rotation, tel qu'un moteur électrique, et/ou
- à la septième vanne 62, et/ou
- à la huitième vanne 63.

La première cuve principale 12 comprend par exemple encore un premier détecteur de niveau 65 conçu pour détecter un niveau de liquide dans la première cuve principale 12, tandis que la deuxième cuve principale 13 comprend un deuxième détecteur niveau 66 conçu pour détecter un niveau de liquide dans la deuxième cuve principale 13. Les premier et deuxième détecteurs de niveau 65, 66 sont par exemple connectés à l'unité de commande 64, notamment via l'interface d'entrée de ladite unité de commande 64.

Les premier et deuxième détecteurs de niveau 65, 66 sont par exemple chacun formés par un capteur de pression installé en partie basse, notamment au fond, de la première ou de la deuxième cuve principale 12, 13. Le capteur de pression mesure ainsi la pression de liquide en partie basse, notamment au fond, de la première ou de la deuxième cuve principale 12, 13. Cette pression correspond à la colonne d'eau au-dessus du capteur de pression dans la première ou la deuxième cuve principale 12, 13, et est donc représentative du niveau de liquide dans ladite première ou deuxième cuve principale 12, 13. Le capteur de pression peut être installé au fond de la première ou de la deuxième cuve principale 12, 13. En variante, le capteur de pression peut être suspendu dans la première ou dans la deuxième cuve principale 12, 13 par un câble accroché en partie supérieure de ladite première ou deuxième cuve principale 12, 13. Le capteur de pression est par exemple connecté à l'unité de commande 64, notamment via l'interface d'entrée de ladite unité de commande 64.

En variante, les premier et deuxième détecteurs de niveau 65, 66 comprennent chacun un flotteur conçu pour flotter sur du liquide dans la première ou la deuxième cuve principale 12, 13, ainsi qu'un capteur connecté à l'unité de commande 64, notamment via l'interface d'entrée de ladite unité de commande 64, et conçu pour envoyer à l'unité de commande 64 un signal correspondant à la position du flotteur, notamment sa hauteur, lorsqu'il flotte sur le liquide dans la première ou la deuxième cuve principale 12, 13. La position du flotteur est représentative du niveau de liquide dans la première ou la deuxième cuve principale 12, 13.

D'autres types de détecteur niveau peuvent bien sûr être mis en œuvre pour les premier et deuxième détecteurs de niveau 65, 66.

Lorsque le premier dispositif à effet Venturi 18 aspire et refoule du liquide de traitement de l'une des première et deuxième cuves principales 12, 13 vers l'autre des première et deuxième cuves principales 12, 13, ici de la première vers la deuxième cuve principale 12, 13, le premier ensemble de pompage 15 occupant notamment sa première, sa deuxième ou sa troisième configuration et, le cas échéant, la septième vanne 62 occupant sa première position, l'unité de commande 64 peut être conçue pour :
- commander la première vanne de dérivation 26 d'ouvrir la première ligne de dérivation 25, notamment d'occuper sa position ouverte ou sa première position, lorsqu'un écart entre le niveau de liquide détecté par le premier détecteur de niveau 65 et le niveau de liquide détecté par le deuxième détecteur de niveau 66 est supérieur ou égal à un écart seuil prédéterminé et que le niveau de liquide détecté le plus bas est celui du premier ou du deuxième détecteur de niveau 65, 66 de l'une des première et deuxième cuves principales 12, 13, ici le premier détecteur de niveau 65,
- commander la première vanne de dérivation 26 de fermer la première ligne de dérivation 25, notamment d'occuper sa position fermée ou sa deuxième position, lorsque l'écart entre le niveau de liquide détecté par le premier détecteur de niveau 65 et le niveau de liquide détecté par le deuxième détecteur de niveau 66 est inférieur à l'écart seuil.

De cette manière, lorsque du liquide de traitement est transféré de la première à la deuxième cuve principale 12, 13 au moyen du premier dispositif à effet Venturi 18, si l'écart entre le niveau de liquide dans la première cuve principale 12 et le niveau de liquide dans la deuxième cuve principale 13 est supérieur ou égal à l'écart seuil et le niveau de liquide dans la deuxième cuve principale 13 est plus bas que le niveau de liquide dans la première cuve principale 12, la première ligne de dérivation 25 s'ouvre par l'intermédiaire de la première vanne de dérivation 26, de manière à ralentir le transfert de liquide de traitement de la première cuve principale 12 à la deuxième cuve principale 13 et donc éviter que l'écart entre les niveaux de liquide dans les première et deuxième cuves principales 12, 13 s'accroisse et puisse conduire à un débordement de la deuxième cuve principale 13.

L'écart seuil est par exemple enregistré dans la mémoire de données de l'unité de commande 64.

Il est entendu par « écart », la différence en valeur absolue entre le niveau de liquide détecté par le premier détecteur de niveau 65 et le niveau de liquide détecté par le deuxième détecteur de niveau 66.

Lorsque le deuxième dispositif à effet Venturi 28 aspire et refoule du liquide de traitement de l'autre des première et deuxième cuves principales 12, 13 vers l'une des première et deuxième cuves principales 12, 13, ici de la deuxième vers à la première cuve principale 13, 12, le premier ensemble de pompage 15 occupant notamment occuper sa première configuration et, le cas échéant, la huitième vanne 63 occupant sa deuxième position, l'unité de commande 64 peut encore être conçue pour :
- commander la deuxième vanne de dérivation 33 d'ouvrir la deuxième ligne de dérivation 32, notamment d'occuper sa position ouverte ou sa première position, lorsque l'écart entre le niveau de liquide détecté par le premier détecteur de niveau 65 et le niveau de liquide détecté par le deuxième détecteur de niveau 66 est supérieur ou égal à l'écart seuil et que le niveau de liquide détecté le plus bas est celui du premier ou du deuxième détecteur de niveau 65, 66 de l'autre des première et deuxième cuves principales 12, 13, ici le deuxième détecteur de niveau 66,
- commander la deuxième vanne de dérivation 33 de fermer la deuxième ligne de dérivation 32, notamment d'occuper sa position fermée ou sa deuxième position, lorsque l'écart entre le niveau de liquide détecté par le premier détecteur de niveau 65 et le niveau de liquide détecté par le deuxième détecteur de niveau 66 est inférieur à l'écart seuil.

De cette manière, lorsque du liquide de traitement est transféré de la deuxième à la première cuve principale 12, 13 au moyen du deuxième dispositif à effet Venturi 28, si l'écart entre le niveau de liquide dans la première cuve principale 12 et le niveau de liquide dans la deuxième cuve principale 13 est supérieur ou égal à l'écart seuil et le niveau de liquide dans la première cuve principale 12 est plus bas que le niveau de liquide dans la deuxième cuve principale 13, la deuxième ligne de dérivation 32 s'ouvre par l'intermédiaire de la deuxième vanne de dérivation 33, de manière à ralentir le transfert de liquide de traitement de la deuxième cuve principale 13 à la première cuve principale 12 et donc éviter que l'écart entre les niveaux de liquide dans les première et deuxième cuves principales 12, 13 s'accroisse et puisse conduire à un débordement de la première cuve principale 12.

En variante, l'unité de commande 64 est conçue pour commander la première vanne de dérivation 26 et/ou la deuxième vanne de dérivation 33 de s'ouvrir et de se fermer entre sa position d'ouverture maximale et sa position fermée, en fonction de l'écart entre le niveau de liquide détecté par le premier détecteur de niveau 65 et le niveau de liquide détecté par le deuxième détecteur de niveau 66 et du plus bas ou du plus haut des niveaux de liquide détectés par les premier et deuxième détecteurs de niveau 65, 66, lorsque le premier dispositif à effet Venturi 18 aspire et refoule du liquide de traitement de l'une des première et deuxième cuves principales 12, 13 vers l'autre des première et deuxième cuves principales 12, 13 et/ou que le deuxième dispositif à effet Venturi 28 aspire et refoule du liquide de traitement de l'autre des première et deuxième cuves principales 12, 13 vers l'une des première et deuxième cuves principales 12, 13.

De cette manière, lorsque le niveau de liquide dans la deuxième cuve principale 13 est trop haut par rapport à celui dans la première cuve principale 12, la première vanne de dérivation 26 s'ouvre davantage et/ou la deuxième vanne de dérivation 33 se ferme davantage, de manière à freiner le transfert de liquide de traitement de la première vers la deuxième cuve principale 12, 13 et/ou à accélérer le transfert de liquide de traitement de la deuxième vers la première cuve principale 13, 12. Au contraire, lorsque le niveau de liquide dans la première cuve principale 12 est trop haut par rapport à celui dans la deuxième cuve principale 13, la première vanne de dérivation 26 se ferme davantage et/ou la deuxième vanne de dérivation 33 s'ouvre davantage, de manière à accélérer le transfert de liquide de traitement de la première vers la deuxième cuve principale 12, 13 et/ou à freiner le transfert de liquide de traitement de la deuxième vers la première cuve principale 13, 12. Cela permet d'éviter que l'écart entre les niveaux de liquide dans les première et deuxième cuves principales 12, 13 s'accroisse et puisse conduire à un débordement de la première et/ou de la deuxième cuve principale 12, 13.

En référence à la [Fig.8], l'unité de commande 64 peut également être configurée pour régler la deuxième et la troisième vanne à débit réglable V2, V3 dans la première position ou dans la deuxième position en fonction du niveau de liquide de traitement mesuré respectivement dans la première cuve principale 12 et la deuxième cuve principale 13.

En outre, par exemple, la première cuve principale 12, le premier ensemble de pompage 15, la ou les premières lignes d'aspiration 16a, 16b, la ou les premières lignes de refoulement 17a-17f, la première ligne de dérivation 25 et, le cas échéant, la deuxième ligne de dérivation 32 forment un premier sous-système de pulvérisation 101, tandis que la deuxième cuve principale 13 et le cas échéant, le deuxième ensemble de pompage 49, la ou les deuxièmes lignes d'aspiration 50a, 50b et la ou les deuxièmes lignes de refoulement 51a-51e forment un deuxième sous-système de pulvérisation 102.

La première ligne de transfert 14 est en outre formée d'au moins deux premiers tronçons de transfert 103, 104, 105 conçus pour se connecter et se déconnecter entre eux de manière réversible au moyen de premiers connecteurs, notamment agencés au niveau de premières vannes de connexion 106, 107. Les premiers connecteurs sont par exemple pourvus de moyens d'accouplement et de désaccouplement rapide, notamment sans outil.

L'un 103 des premiers tronçons de transfert 103, 104, 105 fait partie du premier sous-système de pulvérisation 101. Ledit premier tronçon de transfert 103 comprend le premier dispositif à effet Venturi 18.

L'autre ou un autre 105 des premiers tronçons de transfert 103, 104, 105 fait partie du deuxième sous-système de pulvérisation 102. Ledit premier tronçon de transfert 105 comprend par exemple la septième vanne 62. Il est relié, en aval de la septième vanne 62, d'une part à la deuxième cuve principale 13 et d'autre part à l'entrée 53 de deuxième pompe 52, en contournant la deuxième cuve principale 13.

Un autre 104 des premiers tronçons de transfert 103, 104, 105 peut en outre être conçu pour raccorder les autres premiers tronçons de transfert 103, 105 l'un à l'autre par l'intermédiaire des premiers connecteurs. Les premières vannes de connexion 106, 107 sont conçues pour s'ouvrir et se fermer, de manière à permettre la connexion et la déconnexion des premiers tronçons de transfert 103, 104, 105 entre eux au moyen des premiers connecteurs. Ledit premier tronçon de transfert 104, les premiers connecteurs et, le cas échéant, les premières vannes de connexion 106, 107, sont par exemple portés par l'engin agricole. Ledit premier tronçon de transfert 104 peut encore comprendre le troisième dispositif à effet Venturi 44. Un connecteur associé à une vanne de connexion 113, tous deux portés par l'engin agricole, peut alors être prévu le long de la troisième ligne d'injection 17f, entre le troisième dispositif à effet Venturi 44 et la sixième vanne 48, pour connecter et déconnecter de manière réversible le troisième dispositif à effet Venturi 44 à la sixième vanne 48.

La deuxième ligne de transfert 27 est en outre formée d'au moins deux deuxièmes tronçons de transfert 108, 109, 110 conçus pour se connecter et se déconnecter entre eux de manière réversible au moyen de deuxièmes connecteurs, notamment agencés au niveau de deuxièmes vannes de connexion 111, 112. Les deuxièmes connecteurs sont par exemple pourvus de moyens d'accouplement et de désaccouplement rapide, notamment sans outil.

L'un 108 des deuxièmes tronçons de transfert 108, 109, 110 fait partie du premier sous-système de pulvérisation 101. Ledit deuxième tronçon de transfert 108 peut comprendre le deuxième dispositif à effet Venturi 28.

L'autre ou un autre 110 des deuxièmes tronçons de transfert 108, 109, 110 fait partie du deuxième sous-système de pulvérisation 102.

Un autre 109 des deuxièmes tronçons de transfert 108, 109, 110 peut en outre être conçu pour raccorder les autres deuxièmes tronçons de transfert 108, 110 l'un à l'autre par l'intermédiaire des deuxièmes connecteurs. Les deuxièmes vannes de connexion 111, 112 sont conçues pour s'ouvrir et se fermer, de manière à permettre la connexion et la déconnexion des deuxièmes tronçons de transfert 108, 109, 110 entre eux au moyen des deuxièmes connecteurs. Ledit deuxième tronçon de transfert 109, les deuxièmes connecteurs et, le cas échéant les deuxièmes vannes de connexion 111, 112, sont par exemple portés par l'engin agricole.

Le système de pulvérisation 10 décrit ci-dessus est particulièrement avantageux car la première ligne de dérivation 25 et/ou la deuxième ligne de dérivation 32 permettent d'obtenir un transfert de liquide de traitement entre les première et deuxième cuves principales 12, 13 à au moins deux vitesses : un transfert plus rapide lorsque la première ligne de dérivation 25 et/ou la deuxième ligne de dérivation 32 est fermée et un transfert plus lent lorsque la première ligne de dérivation 25 et/ou la deuxième ligne de dérivation 32 est ouverte.

## Revendications

1. Système de pulvérisation (10) pour engin agricole, comprenant un circuit de liquide (11) comprenant lui-même :
- une première cuve principale (12) destinée à contenir un liquide de traitement,
- une deuxième cuve principale (13) destinée à contenir un liquide de traitement,
- une première ligne de transfert (14) reliant la première cuve principale (12) et la deuxième cuve principale (13) l'une à l'autre et comprenant un premier dispositif à effet Venturi (18) conçu pour aspirer du liquide de traitement de l'une (12) des première et deuxième cuves principales (12, 13) et pour refouler ledit liquide de traitement vers l'autre (13) des première et deuxièmes cuves principales (12, 13) au moyen d'un premier injecteur (21),
- un premier ensemble de pompage (15) comprenant une première pompe (22) comprenant elle-même une entrée (23) et une sortie (24), la première pompe (22) étant conçue pour aspirer du liquide par l'entrée (23) et pour refouler le liquide aspiré par la sortie (24),
- au moins une première ligne de refoulement (17a-17f) reliée, en amont, à la sortie (24) de la première pompe (22), l'une (17a) des premières lignes de refoulement (17a-17f), dite première ligne d'injection, reliant la sortie (24) de la première pompe (22) au premier injecteur (21) du premier dispositif à effet Venturi (18),
le système de pulvérisation (10) étant **caractérisé en ce que**
le circuit de liquide (11) comprend en outre des premiers moyens de réduction de débit de liquide de traitement circulant dans la première ligne de transfert (14) pour être transféré entre la première cuve principale (12) et la deuxième cuve principale (13).

2. Système de pulvérisation (10) pour engin agricole selon la revendication 1, **caractérisé en ce que** les premiers moyens de réduction de débit de liquide de traitement transféré entre la première cuve principale (12) et la deuxième cuve principale (13) comprennent une deuxième vanne à débit réglable (V2) positionnée dans la première ligne d'injection (17a) et ayant une première position dans laquelle la totalité du liquide de traitement circulant dans la première ligne de transfert (14) est transférée de la première cuve principale (12) vers la deuxième cuve principale (13) et une deuxième position dans laquelle une fraction prédéfinie du liquide de traitement circulant dans la première ligne de transfert (14), et non la totalité, est transférée de la première cuve principale (12) vers la deuxième cuve principale (13).

3. Système de pulvérisation (10) pour engin agricole selon la revendication 1, **caractérisé en ce que** les premiers moyens de réduction de débit comprennent une première ligne de dérivation (25) reliant la première ligne d'injection (17a) à la première cuve principale (12) et comprenant une première vanne de dérivation (26) conçue pour ouvrir et pour fermer la première ligne de dérivation (25), de sorte à dévier une partie du liquide circulant dans la première ligne d'injection (17a) et réduire une vitesse de transfert de liquide de traitement entre les première et deuxième cuves principales (12, 13) le long de la première ligne de transfert (14), lorsque la première ligne de dérivation (25) est ouverte et que la première pompe (22) refoule du liquide vers la première ligne d'injection (17a).

4. Système de pulvérisation selon L'une des revendications précédentes, dans lequel :
- le circuit de liquide (11) comprend une deuxième ligne de transfert (27) reliant la première cuve principale (12) et la deuxième cuve principale (13) l'une à l'autre et comprenant un deuxième dispositif à effet Venturi (28) conçu pour aspirer du liquide de traitement de l'autre (13) des première et deuxième cuves principales (12, 13) et pour refouler ledit liquide de traitement vers l'une (12) des première et deuxième cuves principales (12, 13) au moyen d'un deuxième injecteur (31),
- l'une (17b) des premières lignes de refoulement (17a-17f), dite deuxième ligne d'injection, relie la sortie (24) de la première pompe (22) au deuxième injecteur (31) du deuxième dispositif à effet Venturi (28),
- le circuit de liquide (11) comprend des deuxièmes moyens de réduction de débit de liquide de traitement circulant dans la deuxième ligne de transfert (27) pour être transféré entre la deuxième cuve principale (13) et la première cuve principale (12).

5. Système de pulvérisation (10) pour engin agricole selon la revendication 4, **caractérisé en ce que** les deuxièmes moyens de réduction de débit de liquide de traitement transféré entre la deuxième cuve principale (13) et la première cuve principale (12) comprennent une troisième vanne à débit réglable (V3) positionnée dans la deuxième ligne de transfert (27) et ayant une première position dans laquelle la totalité du liquide de traitement circulant dans la deuxième ligne de transfert (27) est transférée de la deuxième cuve principale (13) vers la première cuve principale (12) et une deuxième position dans laquelle une fraction prédéfinie du liquide de traitement circulant dans la deuxième ligne de transfert (27), et non la totalité, est transférée de la deuxième cuve principale (13) vers la première cuve principale (12).

6. Système de pulvérisation (10) pour engin agricole selon la revendication 4, **caractérisé en ce que** les deuxièmes moyens de réduction de débit de liquide de traitement transféré entre la deuxième cuve principale (13) et la première cuve principale (12) comprennent une deuxième ligne de dérivation (32) reliant la deuxième ligne d'injection (17b) à la première cuve principale (12) et comprenant une deuxième vanne de dérivation (33) conçue pour ouvrir et pour fermer la deuxième ligne de dérivation (32), de sorte à dévier une partie du liquide circulant dans la deuxième ligne d'injection (17b) et réduire une vitesse de transfert de liquide de traitement entre les première et deuxième cuves principales (12, 13) le long de la deuxième ligne de transfert (27), lorsque la deuxième ligne de dérivation (32) est ouverte et que la première pompe (22) refoule du liquide vers la deuxième ligne d'injection (17b).

7. Système de pulvérisation (10) selon l'une des revendications 4 à 6, comprenant au moins une première ligne d'aspiration (16a, 16b) reliée, en aval, à l'entrée de la première pompe (22), la ou l'une (16a) des premières lignes d'aspiration (16a, 16b), dite première ligne d'aspiration de cuve principale, reliant la première cuve principale (12) à l'entrée (23) de la première pompe (22), et dans lequel le premier ensemble de pompage (15) est conçu pour, dans une première configuration, mettre en communication la première ligne d'aspiration de cuve principale (16a) avec chacune des première et deuxième lignes d'injection (17a, 17b), de manière à obtenir une boucle de circulation continue de liquide de traitement entre les première et deuxième cuves principales (12, 13).

8. Système de pulvérisation (10) selon l'une des revendications 4 à 7 combinée à la revendication 3, comprenant en outre une unité de commande (64), dans lequel la première cuve principale (12) comprend un premier détecteur de niveau (65) conçu pour détecter un niveau de liquide dans la première cuve principale (12), dans lequel la deuxième cuve principale (13) comprend un deuxième détecteur de niveau (66) conçu pour détecter un niveau de liquide dans la deuxième cuve principale (13), et dans lequel l'unité de commande (64) est conçue pour, lorsque le premier dispositif à effet Venturi (18) aspire et refoule du liquide de traitement de l'une (12) des première et deuxième cuves principales (12, 13) vers l'autre (13) des première et deuxième cuves principales (12, 13) :
- commander la première vanne de dérivation (26) d'ouvrir la première ligne de dérivation (25), lorsqu'un écart entre le niveau de liquide détecté par le premier détecteur de niveau (65) et le niveau de liquide détecté par le deuxième détecteur de niveau (66) est supérieur ou égal à un écart seuil prédéterminé et que le niveau de liquide détecté le plus bas est celui du premier ou du deuxième détecteur de niveau (65, 66) de l'une (12) des première et deuxième cuves principales (12, 13),
- commander la première vanne de dérivation (26) de fermer la première ligne de dérivation (25), lorsque l'écart entre le niveau de liquide détecté par le premier détecteur de niveau (65) et le niveau de liquide détecté par le deuxième détecteur de niveau (66) est inférieur à l'écart seuil.

9. Système de pulvérisation (10) selon la revendication 8 et la revendication 6, dans lequel l'unité de commande (64) est conçue pour, lorsque le deuxième dispositif à effet Venturi (28) aspire et refoule du liquide de traitement de l'autre (13) des première et deuxième cuves principales (12, 13) vers l'une (12) des première et deuxième cuves principales (12, 13) :
- commander la deuxième vanne de dérivation (33) d'ouvrir la deuxième ligne de dérivation (32), lorsque l'écart entre le niveau de liquide détecté par le premier détecteur de niveau (65) et le niveau de liquide détecté par le deuxième détecteur de niveau (66) est supérieur ou égal à l'écart seuil et que le niveau de liquide détecté le plus bas est celui du premier ou du deuxième détecteur de niveau (65, 66) de l'autre des première et deuxième cuves principales (12, 13),
- commander la deuxième vanne de dérivation (33) de fermer la deuxième ligne de dérivation (32), lorsque l'écart entre le niveau de liquide détecté par le premier détecteur de niveau (65) et le niveau de liquide détecté par le deuxième détecteur de niveau (66) est inférieur à l'écart seuil.

10. Système de pulvérisation (10) selon l'une des revendications 4 à 7 combinée à la revendication 3 et à la revendication 6, comprenant en outre une unité de commande (64), dans lequel la première cuve principale (12) comprend un premier détecteur de niveau (65) conçu pour détecter un niveau de liquide dans la première cuve principale (12), dans lequel la deuxième cuve principale (13) comprend un deuxième détecteur de niveau (66) conçu pour détecter un niveau de liquide dans la deuxième cuve principale (13), et dans lequel l'unité de commande (64) est conçue pour commander la première vanne de dérivation (26) et/ou la deuxième vanne de dérivation (33) de s'ouvrir et de se fermer entre une position d'ouverture maximale et une position fermée, en fonction d'un écart entre le niveau de liquide détecté par le premier détecteur de niveau (65) et le niveau de liquide détecté par le deuxième détecteur de niveau (66) et du plus bas ou du plus haut des niveaux de liquide détectés par les premier et deuxième détecteurs de niveau (65, 66), lorsque le premier dispositif à effet Venturi (18) aspire et refoule du liquide de traitement de l'une (12) des première et deuxième cuves principales (12, 13) vers l'autre (13) des première et deuxième cuves principales (12, 13) et/ou que le deuxième dispositif à effet Venturi (28) aspire et refoule du liquide de traitement de l'autre (13) des première et deuxième cuves principales (12, 13) vers l'une (12) des première et deuxième cuves principales (12, 13).

11. Système de pulvérisation (10) selon l'une des revendications 1 à 10, s'étendant suivant une direction longitudinale orientée d'arrière en avant dans un sens d'avancement dudit système de pulvérisation (10), et dans lequel la première cuve principale (12) est agencée à l'avant du système de pulvérisation (10), tandis que la deuxième cuve principale (13) est agencée à l'arrière du système de pulvérisation (10).

12. Système de pulvérisation (10) selon l'une des revendications 1 à 11 combinée à la revendication 4, dans lequel :
- la première cuve principale (12), le premier ensemble de pompage (15), la ou les premières lignes de refoulement (17a-17f), les premiers et les deuxièmes moyens de réduction de débit de liquide de traitement forment un premier sous-système de pulvérisation (101),
- la deuxième cuve principale (13) forme un deuxième sous-système de pulvérisation (102),
- la première ligne de transfert (14) est formée d'au moins deux premiers tronçons de transfert (103, 104, 105) conçus pour se connecter et se déconnecter entre eux de manière réversible, l'un (103) des premiers tronçons de transfert (103, 104, 105) faisant partie du premier sous-système de pulvérisation (101) et comprenant le premier dispositif à effet Venturi (18), l'autre ou un autre (105) des premiers tronçons de transfert (103, 104, 105) faisant partie du deuxième sous-système de pulvérisation (102), et/ou
- la deuxième ligne de transfert (27) est formée d'au moins deux deuxièmes tronçons de transfert (108, 109, 110) conçus pour se connecter et se déconnecter entre eux de manière réversible, l'un (108) des deuxièmes tronçons de transfert (108, 109, 110) faisant partie du premier sous-système de pulvérisation (101) et comprenant le deuxième dispositif à effet Venturi (28), l'autre ou un autre (110) des deuxièmes tronçons de transfert (108, 109, 110) faisant partie du deuxième sous-système de pulvérisation (102).

13. Engin agricole comprenant un système de pulvérisation selon l'une des revendications 1 à 12.

## Patentansprüche

1. Sprühsystem (10) für landwirtschaftliche Maschine, umfassend einen Flüssigkeitskreislauf (11), der an sich Folgendes umfasst:
- einen ersten Haupttank (12), der dazu bestimmt ist, eine Behandlungsflüssigkeit zu enthalten,
- einen zweiten Haupttank (13), der dazu bestimmt ist, eine Behandlungsflüssigkeit zu enthalten,
- eine erste Übertragungsleitung (14), die den ersten Haupttank (12) und den zweiten Haupttank (13) miteinander verbindet und umfassend eine erste Venturi-Effekt-Vorrichtung (18), die konzipiert ist, um die Behandlungsflüssigkeit aus dem einen (12) von dem ersten und dem zweiten Haupttank (12, 13) anzusaugen und um die Behandlungsflüssigkeit mittels einer ersten Einspritzdüse (21) in den anderen (13) von dem ersten und dem zweiten Haupttank (12, 13) zu fördern,
- eine erste Pumpenanordnung (15), umfassend eine erste Pumpe (22), an sich umfassend einen Eingang (23) und einen Ausgang (24), wobei die erste Pumpe (22) konzipiert ist, um die Flüssigkeit durch den Eingang (23) anzusaugen und um die angesaugte Flüssigkeit durch den Ausgang (24) zu fördern,
- mindestens eine erste Förderleitung (17a-17f), die stromaufwärts mit dem Ausgang (24) der ersten Pumpe (22) verbunden ist, wobei eine (17a) der ersten Förderleitungen (17a-17f), die sogenannte erste Einspritzleitung, den Ausgang (24) der ersten Pumpe (22) mit der ersten Einspritzdüse (21) der ersten Venturi-Effekt-Vorrichtung (18) verbindet,
wobei das Sprühsystem (10) **dadurch gekennzeichnet ist, dass** der Flüssigkeitskreislauf (11) ferner erste Einrichtungen zum Reduzieren der Durchflussmenge an Behandlungsflüssigkeit umfasst, die in der ersten Übertragungsleitung (14) zirkuliert, um zwischen dem ersten Haupttank (12) und dem zweiten Haupttank (13) übertragen zu werden.

2. Sprühsystem (10) für landwirtschaftliche Maschine nach Anspruch 1, **dadurch gekennzeichnet, dass** die ersten Einrichtungen zum Reduzieren der Durchflussmenge an Behandlungsflüssigkeit, die zwischen dem ersten Haupttank (12) und dem zweiten Haupttank (13) übertragen wird, ein zweites Ventil mit einstellbarer Durchflussmenge (V2) umfassen, das in der ersten Einspritzleitung (17a) positioniert ist und eine erste Position, in der die gesamte in der ersten Übertragungsleitung (14) zirkulierende Behandlungsflüssigkeit von dem ersten Haupttank (12) zu dem zweiten Haupttank (13) übertragen wird, und eine zweite Position, in der ein vordefinierter Anteil der in der ersten Übertragungsleitung (14) zirkulierenden Behandlungsflüssigkeit, und nicht die gesamte Menge, von dem ersten Haupttank (12) zu dem zweiten Haupttank (13) übertragen wird, aufweist.

3. Sprühsystem (10) für landwirtschaftliche Maschine nach Anspruch 1, **dadurch gekennzeichnet, dass** die ersten Einrichtungen zum Reduzieren der Durchflussmenge eine erste Bypassleitung (25) umfassen, die die erste Einspritzleitung (17a) mit dem ersten Haupttank (12) verbindet und umfassend ein erstes Bypassventil (26), das konzipiert ist, um die erste Bypassleitung (25) zu öffnen und zu schließen, um einen Teil der in der ersten Einspritzleitung (17a) zirkulierenden Flüssigkeit umzuleiten und eine Übertragungsgeschwindigkeit der Behandlungsflüssigkeit zwischen dem ersten und dem zweiten Haupttank (12, 13) entlang der ersten Übertragungsleitung (14) zu reduzieren, wenn die erste Bypassleitung (25) geöffnet ist und die erste Pumpe (22) Flüssigkeit zu der ersten Einspritzleitung (17a) fördert.

4. Sprühsystem nach einem der vorherigen Ansprüche, wobei:
- der Flüssigkeitskreislauf (11) eine zweite Übertragungsleitung (27) umfasst, die den ersten Haupttank (12) und den zweiten Haupttank (13) miteinander verbindet und umfassend eine zweite Venturi-Effekt-Vorrichtung (28), die konzipiert ist, um Behandlungsflüssigkeit aus dem anderen (13) von dem ersten und dem zweiten Haupttank (12, 13) anzusaugen und die Behandlungsflüssigkeit mittels einer zweiten Einspritzdüse (31) in den einen (12) von dem ersten und dem zweiten Haupttank (12, 13) zu fördern,
- wobei eine (17b) der ersten Förderleitungen (17a-17f), die sogenannte zweite Einspritzleitung, den Ausgang (24) der ersten Pumpe (22) mit der zweiten Einspritzdüse (31) der zweiten Venturi-Effekt-Vorrichtung (28) verbindet,
- der Flüssigkeitskreislauf (11) zweite Einrichtungen zum Reduzieren der Durchflussmenge an Behandlungsflüssigkeit umfasst, die in der zweiten Übertragungsleitung (27) zirkuliert, um zwischen dem zweiten Haupttank (13) und dem ersten Haupttank (12) übertragen zu werden.

5. Sprühsystem (10) für landwirtschaftliche Maschine nach Anspruch 4, **dadurch gekennzeichnet, dass** die zweiten Einrichtungen zum Reduzieren der Durchflussmenge an Behandlungsflüssigkeit, die zwischen dem zweiten Haupttank (13) und dem ersten Haupttank (12) übertragen wird, ein drittes Ventil mit einstellbarer Durchflussmenge (V3) umfassen, das in der zweiten Übertragungsleitung (27) positioniert ist und eine erste Position, in der die gesamte in der zweiten Übertragungsleitung (27) zirkulierende Behandlungsflüssigkeit von dem zweiten Haupttank (13) zu dem ersten Haupttank (12) übertragen wird, und eine zweite Position, in der ein vordefinierter Anteil der in der zweiten Übertragungsleitung (27) zirkulierenden Behandlungsflüssigkeit, und nicht die gesamte Menge, von dem zweiten Haupttank (13) zu dem ersten Haupttank (12) übertragen wird, aufweist.

6. Sprühsystem (10) für landwirtschaftliche Maschine nach Anspruch 4, **dadurch gekennzeichnet, dass** die zweiten Einrichtungen zum Reduzieren der Durchflussmenge an Behandlungsflüssigkeit, die zwischen dem zweiten Haupttank (13) und dem ersten Haupttank (12) übertragen wird, eine zweite Bypassleitung (32) umfassen, die die zweite Einspritzleitung (17b) mit dem ersten Haupttank (12) verbindet und ein zweites Bypassventil (33) umfasst, das konzipiert ist, um die zweite Bypassleitung (32) zu öffnen und zu schließen, um einen Teil der in der zweiten Einspritzleitung (17b) zirkulierenden Flüssigkeit umzuleiten und eine Übertragungsgeschwindigkeit der Behandlungsflüssigkeit zwischen dem ersten und dem zweiten Haupttank (12, 13) entlang der zweiten Übertragungsleitung (27) zu reduzieren, wenn die zweite Bypassleitung (32) geöffnet ist und die erste Pumpe (22) Flüssigkeit zu der zweiten Einspritzleitung (17b) fördert.

7. Sprühsystem (10) nach einem der Ansprüche 4 bis 6, umfassend mindestens eine erste Saugleitung (16a, 16b), die stromabwärts mit dem Eingang der ersten Pumpe (22) verbunden ist, wobei die oder eine (16a) der ersten Saugleitungen (16a, 16b), die sogenannte erste Haupttank-Saugleitung bezeichnet wird, den ersten Haupttank (12) mit dem Eingang (23) der ersten Pumpe (22) verbindet, und wobei die erste Pumpenanordnung (15) konzipiert ist, um in einer ersten Konfiguration die erste Haupttank-Saugleitung (16a) mit jeder von der ersten und der zweiten Einspritzleitung (17a, 17b) zu verbinden, um eine kontinuierliche Zirkulationsschleife von Behandlungsflüssigkeit zwischen dem ersten und dem zweiten Haupttank (12, 13) zu erlangen.

8. Sprühsystem (10) nach einem der Ansprüche 4 bis 7 in Kombination mit Anspruch 3, ferner umfassend eine Steuereinheit (64), wobei der erste Haupttank (12) einen ersten Standgeber (65) umfasst, der konzipiert ist, um einen Flüssigkeitsstand in dem ersten Haupttank (12) zu erfassen, wobei der zweite Haupttank (13) einen zweiten Standgeber (66) umfasst, der konzipiert ist, um einen Flüssigkeitsstand in dem zweiten Haupttank (13) zu erfassen, und wobei die Steuereinheit (64), wenn die erste Venturi-Effekt-Vorrichtung (18) Behandlungsflüssigkeit von einem (12) von dem ersten und dem zweiten Haupttank (12, 13) zu dem anderen (13) von dem ersten und dem zweiten Haupttank (12, 13) saugt und fördert, zu Folgendem konzipiert ist:
- Steuern des ersten Bypassventils (26), um die erste Bypassleitung (25) zu öffnen, wenn eine Abweichung zwischen dem von dem ersten Standgeber (65) erfassten Flüssigkeitsstand und dem von dem zweiten Standgeber (66) erfassten Flüssigkeitsstand größer als oder gleich wie eine vorbestimmte Schwellenwertabweichung ist und der niedrigste erfasste Flüssigkeitsstand jener des ersten oder des zweiten Standgebers (65, 66) von einem (12) von dem ersten und dem zweiten Haupttank (12, 13) ist,
- Anweisen des ersten Bypassventils (26), die erste Bypassleitung (25) zu schließen, wenn die Abweichung zwischen dem von dem ersten Standgeber (65) erfassten Flüssigkeitsstand und dem vom zweiten Standgeber (66) erfassten Flüssigkeitsstand kleiner ist als die Schwellenwertabweichung.

9. Sprühsystem (10) nach Anspruch 8 und Anspruch 6, wobei die Steuereinheit (64), wenn die zweite Venturi-Effekt-Vorrichtung (28) Behandlungsflüssigkeit aus dem anderen (13) von dem ersten und dem zweiten Haupttank (12, 13) in den einen (12) von dem ersten und dem zweiten Haupttank (12, 13) saugt und fördert, zu Folgendem konzipiert ist:
- Steuern des zweiten Bypassventils (33), um die zweite Bypassleitung (32) zu öffnen, wenn die Abweichung zwischen dem von dem ersten Standgeber (65) erfassten Flüssigkeitsstand und dem von dem zweiten Standgeber (66) erfassten Flüssigkeitsstand größer als oder gleich wie die Schwellenwertabweichung ist und der niedrigste erfasste Flüssigkeitsstand jener des ersten oder des zweiten Standgebers (65, 66) von dem anderen von dem ersten und dem zweiten Haupttank (12, 13) ist,
- Anweisen des zweiten Bypassventils (33), die zweite Bypassleitung (32) zu schließen, wenn die Abweichung zwischen dem von dem ersten Standgeber (65) erfassten Flüssigkeitsstand und dem vom zweiten Standgeber (66) erfassten Flüssigkeitsstand kleiner ist als die Schwellenwertabweichung.

10. Sprühsystem (10) nach einem der Ansprüche 4 bis 7 in Kombination mit Anspruch 3 und Anspruch 6, ferner umfassend eine Steuereinheit (64), wobei der erste Haupttank (12) einen ersten Standgeber (65) umfasst, der konzipiert ist, um einen Flüssigkeitsstand in dem ersten Haupttank (12) zu erfassen, wobei der zweite Haupttank (13) einen zweiten Standgeber (66) umfasst, der konzipiert ist, um einen Flüssigkeitsstand in dem zweiten Haupttank (13) zu erfassen, und wobei die Steuereinheit (64) konzipiert ist, um das erste Bypassventil (26) und/oder das zweite Bypassventil (33) zu steuern, um zwischen einer maximal offenen Position und einer geschlossenen Position zu öffnen und zu schließen, abhängig von einer Abweichung zwischen dem von dem ersten Standgeber (65) erfassten Flüssigkeitsstand und dem von dem zweiten Standgeber (66) erfassten Flüssigkeitsstand und dem niedrigsten oder höchsten der von dem ersten und dem zweiten Standgeber (65,66) erfassten Flüssigkeitsstand, wenn die erste Venturi-Effekt-Vorrichtung (18) Behandlungsflüssigkeit von einem (12) von dem ersten und dem zweiten Haupttank (12, 13) zu dem anderen (13) von dem ersten und dem zweiten Haupttank (12, 13) saugt und fördert und/oder die zweite Venturi-Effekt-Vorrichtung (28) Behandlungsflüssigkeit von dem anderen (13) von dem ersten und dem zweiten Haupttank (12, 13) zu dem einen (12) von dem ersten und dem zweiten Haupttank (12, 13) saugt und fördert.

11. Sprühsystem (10) nach einem der Ansprüche 1 bis 10, das sich entlang einer Längsrichtung erstreckt, die von hinten nach vorne in einer Vorwärtsrichtung des Sprühsystems (10) ausgerichtet ist, und wobei der erste Haupttank (12) an der Vorderseite des Sprühsystems (10) angeordnet ist, während der zweite Haupttank (13) an der Rückseite des Sprühsystems (10) angeordnet ist.

12. Sprühsystem (10) nach einem der Ansprüche 1 bis 11 in Kombination mit Anspruch 4, wobei:
- der erste Haupttank (12), die erste Pumpenanordnung (15), die erste(n) Förderleitung(en) (17a-17f), die ersten und die zweiten Einrichtungen zum Reduzieren der Durchflussmenge an Behandlungsflüssigkeit ein erstes Sprühuntersystem (101) bilden,
- der zweite Haupttank (13) ein zweites Sprühuntersystem (102) bildet,
- die erste Übertragungsleitung (14) aus mindestens zwei ersten Übertragungsabschnitten (103, 104, 105) gebildet ist, die konzipiert sind, um umkehrbar miteinander verbunden und voneinander getrennt zu werden, wobei einer (103) der ersten Übertragungsabschnitte (103, 104, 105) Teil des ersten Sprühuntersystems (101) ist und die erste Venturi-Effekt-Vorrichtung (18) umfasst, der andere oder ein anderer (105) der ersten Übertragungsabschnitte (103, 104, 105) Teil des zweiten Sprühuntersystems (102) ist, und/oder
- die zweite Übertragungsleitung (27) aus mindestens zwei zweiten Übertragungsabschnitten (108, 109, 110) gebildet ist, die konzipiert sind, um umkehrbar miteinander verbunden und voneinander getrennt zu werden, wobei einer (108) der zweiten Übertragungsabschnitte (108, 109, 110) Teil des ersten Sprühuntersystems (101) ist und die zweiten Venturi-Effekt-Vorrichtung (28) umfasst, der andere oder ein anderer (110) der zweiten Übertragungsabschnitte (108, 109, 110) Teil des zweiten Sprühuntersystems (102) ist.

13. Landwirtschaftliche Maschine, umfassend ein Sprühsystem nach einem der Ansprüche 1 bis 12.

## Claims

1. A spray system (10) for an agricultural machine, comprising a liquid circuit (11) comprising itself:
- a first main tank (12) intended to contain a treatment liquid,
- a second main tank (13) intended to contain a treatment liquid,
- a first transfer line (14) connecting the first main tank (12) and the second main tank (13) to each other and comprising a first Venturi-effect device (18) designed to suck treatment liquid from one (12) of the first and second main tanks (12, 13) and to discharge said treatment liquid to the other (13) of the first and second main tanks (12, 13) by means of a first injector (21),
- a first pumping assembly (15) comprising a first pump (22) comprising itself an inlet (23) and an outlet (24), the first pump (22) being designed to suck liquid through the inlet (23) and to discharge the sucked liquid through the outlet (24),
- at least one first discharge line (17a-17f) connected, upstream, to the outlet (24) of the first pump (22), one (17a) of the first discharge lines (17a-17f), called the first injection line, connecting the outlet (24) of the first pump (22) to the first injector (21) of the first Venturi-effect device (18),
the spray system (10) being **characterized in that**
the liquid circuit (11) further comprises first means of reducing the flow rate of treatment liquid circulating in the first transfer line (14) to be transferred between the first main tank (12) and the second main tank (13).

2. The spray system (10) for an agricultural machine according to claim 1, **characterized in that** the first means of reducing the flow rate of treatment liquid transferred between the first main tank (12) and the second main tank (13) comprise a second adjustable flow valve (V2) positioned in the first injection line (17a) and having a first position wherein the entire treatment liquid circulating in the first transfer line (14) is transferred from the first main tank (12) to the second main tank (13) and a second position wherein a predefined fraction of the treatment liquid circulating in the first transfer line (14), and not the entire treatment liquid, is transferred from the first main tank (12) to the second main tank (13).

3. The spray system (10) for an agricultural machine according to claim 1, **characterized in that** the first means of reducing the flow rate comprise a first bypass line (25) connecting the first injection line (17a) to the first main tank (12) and comprising a first bypass valve (26) designed to open and close the first bypass line (25), so as to divert part of the liquid circulating in the first injection line (17a) and reduce a speed of transfer of treatment liquid between the first and second main tanks (12, 13) along the first transfer line (14), when the first bypass line (25) is open and the first pump (22) discharges liquid to the first injection line (17a).

4. The spray system according to one of the preceding claims, wherein:
- the liquid circuit (11) comprises a second transfer line (27) connecting the first main tank (12) and the second main tank (13) to each other and comprising a second Venturi-effect device (28) designed to suck treatment liquid from the other (13) of the first and second main tanks (12, 13) and to discharge said treatment liquid to one (12) of the first and second main tanks (12, 13) by means of a second injector (31),
- one (17b) of the first discharge lines (17a-17f), called the second injection line, connects the outlet (24) of the first pump (22) to the second injector (31) of the second Venturi-effect device (28),
- the liquid circuit (11) comprises second means of reducing the flow rate of treatment liquid circulating in the second transfer line (27) to be transferred between the second main tank (13) and the first main tank (12).

5. The spray system (10) for an agricultural machine according to claim 4, **characterized in that** the second means of reducing the flow rate of treatment liquid transferred between the second main tank (13) and the first main tank (12) comprise a third adjustable flow valve (V3) positioned in the second transfer line (27) and having a first position wherein the entire treatment liquid circulating in the second transfer line (27) is transferred from the second main tank (13) to the first main tank (12) and a second position wherein a predefined fraction of the treatment liquid circulating in the second transfer line (27), and not the entire treatment liquid, is transferred from the second main tank (13) to the first main tank (12).

6. The spray system (10) for an agricultural machine according to claim 4, **characterized in that** the second means of reducing the flow rate of treatment liquid transferred between the second main tank (13) and the first main tank (12) comprise a second bypass line (32) connecting the second injection line (17b) to the first main tank (12) and comprising a second bypass valve (33) designed to open and close the second bypass line (32), so as to divert part of the liquid circulating in the second injection line (17b) and reduce a speed of transfer of treatment liquid between the first and second main tanks (12, 13) along the second transfer line (27), when the second bypass line (32) is open and the first pump (22) discharges liquid to the second injection line (17b).

7. The spray system (10) according to one of claims 4 to 6, comprising at least one first suction line (16a, 16b) connected, downstream, to the inlet of the first pump (22), the or one (16a) of the first suction lines (16a, 16b), called the first main tank suction line, connecting the first main tank (12) to the inlet (23) of the first pump (22), and wherein the first pumping assembly (15) is designed to, in a first configuration, connect the first main tank suction line (16a) with each of the first and second injection lines (17a, 17b), so as to obtain a continuous circulation loop of treatment liquid between the first and second main tanks (12, 13).

8. The spray system (10) according to one of claims 4 to 7 combined with claim 3, further comprising a control unit (64), wherein the first main tank (12) comprises a first level detector (65) designed to detect a liquid level in the first main tank (12), wherein the second main tank (13) comprises a second level detector (66) designed to detect a liquid level in the second main tank (13), and wherein the control unit (64) is designed to, when the first Venturi-effect device (18) sucks and discharges treatment liquid from one (12) of the first and second main tanks (12, 13) to the other (13) of the first and second main tanks (12, 13):
- command the first bypass valve (26) to open the first bypass line (25), when a gap between the liquid level detected by the first level detector (65) and the liquid level detected by the second level detector (66) is greater than or equal to a predetermined threshold gap and the lowest detected liquid level is that of the first or second level detector (65, 66) of one (12) of the first and second main tanks (12, 13),
- command the first bypass valve (26) to close the first bypass line (25), when the gap between the liquid level detected by the first level detector (65) and the liquid level detected by the second level detector (66) is less than the threshold gap.

9. The spray system (10) according to claim 8 and claim 6, wherein the control unit (64) is designed to, when the second Venturi-effect device (28) sucks and discharges treatment liquid from the other (13) of the first and second main tanks (12, 13) to one (12) of the first and second main tanks (12, 13):
- command the second bypass valve (33) to open the second bypass line (32), when the gap between the liquid level detected by the first level detector (65) and the liquid level detected by the second level detector (66) is greater than or equal to the threshold gap and the lowest detected liquid level is that of the first or second level detector (65, 66) of the other of the first and second main tanks (12, 13),
- command the second bypass valve (33) to close the second bypass line (32), when the gap between the liquid level detected by the first level detector (65) and the liquid level detected by the second level detector (66) is less than the threshold gap.

10. The spray system (10) according to one of claims 4 to 7 combined with claim 3 and claim 6, further comprising a control unit (64), wherein the first main tank (12) comprises a first level detector (65) designed to detect a liquid level in the first main tank (12), wherein the second main tank (13) comprises a second level detector (66) designed to detect a liquid level in the second main tank (13), and wherein the control unit (64) is designed to command the first bypass valve (26) and/or the second bypass valve (33) to open and close between a maximum open position and a closed position, depending on a gap between the liquid level detected by the first level detector (65) and the liquid level detected by the second level detector (66) and the lowest or highest of the liquid levels detected by the first and second level detectors (65, 66), when the first Venturi-effect device (18) sucks and discharges treatment liquid from one (12) of the first and second main tanks (12, 13) to the other (13) of the first and second main tanks (12, 13) and/or when the second Venturi-effect device (28) sucks and discharges treatment liquid from the other (13) of the first and second main tanks (12, 13) to one (12) of the first and second main tanks (12, 13).

11. The spray system (10) according to one of claims 1 to 10, extending in a longitudinal direction oriented from back to front in a direction of advancement of said spray system (10), and wherein the first main tank (12) is arranged at the front of the spray system (10), while the second main tank (13) is arranged at the back of the spray system (10).

12. The spray system (10) according to one of claims 1 to 11 combined with claim 4, wherein:
- the first main tank (12), the first pumping assembly (15), the one or more first discharge lines (17a-17f), the first and second means of reducing the flow rate of treatment liquid form a first spray subsystem (101),
- the second main tank (13) forms a second spray subsystem (102),
- the first transfer line (14) is formed of at least two first transfer sections (103, 104, 105) designed to connect and disconnect from each other reversibly, one (103) of the first transfer sections (103, 104, 105) being part of the first spray subsystem (101) and comprising the first Venturi-effect device (18), the other or another (105) of the first transfer sections (103, 104, 105) being part of the second spray subsystem (102), and/or
- the second transfer line (27) is formed of at least two second transfer sections (108, 109, 110) designed to connect and disconnect from each other reversibly, one (108) of the second transfer sections (108, 109, 110) being part of the first spray subsystem (101) and comprising the second Venturi-effect device (28), the other or another (110) of the second transfer sections (108, 109, 110) being part of the second spray subsystem (102).

13. The agricultural machine comprising a spray system according to one of claims 1 to 12.
